# EUROPÄISCHE PATENTSCHRIFT

(11) **EP 3 521 147 B1**
(45) Veröffentlichungstag und Bekanntmachung des Hinweises auf die Patenterteilung: **30.11.2022**
(21) Anmeldenummer: 19153644.0
(22) Anmeldetag: 25.01.2019
(51) Int. Cl.: B62D 63/02, B60F 5/02, G06Q 10/08, B60L 53/80

(54) **MODULARER TRANSPORTROBOTER UND TRANSPORTROBOTERSYSTEM**
MODULAR TRANSPORT ROBOT AND TRANSPORT ROBOT SYSTEM
ROBOT DE TRANSPORT MODULAIRE ET SYSTÈME DE ROBOT DE TRANSPORT

(30) Priorität: 31.01.2018 DE 102018102127
(43) Veröffentlichungstag der Anmeldung: 07.08.2019
(73) Patentinhaber: Deutsche Post AG, 53113 Bonn (DE)
(72) Erfinder: Radetzki, Uwe, 53127 Bonn (DE); Trendafilov, Boris, 53757 Sankt Augustin (DE); Kong, Don-Uck, 53127 Bonn (DE); Drees, Sandra, 53639 Königswinter (DE); Bischoff, Heike, 51143 Köln (DE)
(74) Vertreter: Cohausz & Florack

(56) Entgegenhaltungen:
- EP-A1- 1 440 832
- EP-B1- 3 310 615
- WO-A1-2017/079289
- DE-A1-102016 014 882
- FR-A1- 3 035 870
- US-A1- 2013 175 829
- US-A1- 2017 203 801
- US-B1- 9 387 928

## Beschreibung

### Gebiet

Die Erfindung betrifft einen modularen Transportroboter zum Transportieren von Sendungen. Ferner betrifft die Erfindung ein Transportrobotersystem zum modularen Zusammenstellen von solchen modularen Transportrobotern.

### Hintergrund

Es sind bereits Transportroboter beschrieben worden, die dem Transport von Sendungen im öffentlichen Raum dienen. Insbesondere dienen diese Transportroboter dem autonomen Abliefern oder Zustellen von Sendungen an Empfänger oder in Empfangseinrichtungen, aus denen ein Empfänger die Sendungen dann zu einem späteren Zeitpunkt entnehmen kann. Diese Transportroboter werden grundsätzlich aus unterschiedlichen einzelnen Komponenten zusammengesetzt, wobei sich einzelne Komponenten im Falle eines Defekts oder dergleichen durch andere Komponenten ersetzen lassen. Diese gegeneinander auszutauschenden Komponenten sind dann typischerweise gleichartig ausgebildet, so dass Komponenten durch gleiche andere Komponenten ausgetauscht werden. Grundsätzlich ist es auch möglich, bestimmte Komponenten durch andersartige Komponenten zu ersetzten. Dies erfordert jedoch eine aufwendige Anpassung der übrigen Komponenten des entsprechenden Transportroboters. Dies ist jedoch einerseits aufwendig und erfordert eine nicht unerhebliche Zeitspanne, weshalb dieser Komponentenaustausch umständlich und kostenintensiv ist.

Mithin werden die bekannten Transportroboter so ausgebildet, dass sie für verschiedene Anforderungen geeignet sind, was selbstverständlich entsprechende Kompromisse erfordert. Um diese Kompromisse in vertretbaren Grenzen halten zu können, werden für grundsätzlich andere Anwendungsfälle jeweils wiederum spezielle Transportroboter entwickelt. Die DE102016014882 zeigt einen modularen Transportroboter zum Transportieren von Sendungen.

### Zusammenfassung einiger beispielhafter Ausführungsformen der Erfindung

Der vorliegenden Erfindung liegt die Aufgabe zugrunde, den modularen Transportroboter und das Transportrobotersystem der eingangs genannten und zuvor näher beschriebenen Art derart auszugestalten und weiterzubilden, dass auf kostengünstige Weise den sehr unterschiedlichen Anforderungen an die Transportroboter Rechnung getragen werden kann.

Diese Aufgabe wird nach Anspruch 1 gelöst durch einen modularen Transportroboter zum Transportieren von Sendungen, mit wenigstens einem Basiselement zum körperlichen Aufbau des Transportroboters, mit wenigstens zwei Ergänzungsmodulen zum technischen Ausstatten des Transportroboters, mit wenigstens einer Sendungsbox zur Aufnahme von Sendungen und mit wenigstens einer Steuereinrichtung zum Steuern des Transportroboters, wobei das wenigstens eine Basiselement und jedes der Ergänzungsmodule korrespondierende Steckverbindungselemente aufweisen und jeweils über wenigstens eine elektrische Steckverbindung umfassend die korrespondierenden Verbindungselemente elektrisch miteinander verbunden sind, wobei das wenigstens eine Basiselement wenigstens einen Kabelbaum zum elektrischen Verbinden der Verbindungselemente des Basiselements untereinander aufweist, wobei das wenigstens eine Basiselement und die Ergänzungsmodule derart korrespondierend zueinander ausgebildet sind, dass die Verbindungselemente der wenigstens zwei Ergänzungsmodule jeweils wahlweise direkt mit wenigstens zwei an unterschiedlichen Stellen vorgesehenen Verbindungselementen unter Ausbildung jeweils einer gemeinsamen Verbindung mit dem wenigstens einen Basiselement verbindbar sind, wobei das wenigstens eine Basiselement eine Mehrzahl voneinander beabstandeter Aufnahmen zum formschlüssigen Aufnehmen von Ergänzungsmodulen aufweist, wobei die wenigstens zwei Ergänzungsmodule in unterschiedlichen Aufnahmen formschlüssig aufgenommen sind, wobei die Aufnahmen eine Öffnung zum Einführen der Ergänzungsmodule aufweisen und wobei an den den Öffnungen abgewandten Seiten der Aufnahmen wenigstens ein Verbindungselement vorgesehen ist..

Ferner wird diese Aufgabe nach Anspruch 11 gelöst durch ein Transportrobotersystem zum modularen Zusammenstellen von modularen Transportrobotern nach einem der Ansprüche 1 bis 10, zum Transportieren von Sendungen, mit Basiselementen zum körperlichen Aufbau der Transportroboter, unterschiedlichen Ergänzungsmodulen zum technischen Ausstatten des Transportroboters, und mit Steuereinrichtungen zum Steuern der Transportroboter, wobei die Basiselemente und die Ergänzungsmodule korrespondierende Verbindungselemente zum elektrischen Verbinden der Basiselemente jeweils mit einer Mehrzahl von Ergänzungsmodulen aufweisen, wobei die Basiselemente jeweils wenigstens einen Kabelbaum zum elektrischen Verbinden der Verbindungselemente des Basiselements untereinander aufweisen und wobei die Basiselemente und die Ergänzungsmodule derart korrespondierend zueinander ausgebildet sind, dass wahlweise an einer Stelle der Basiselemente gleichartige und/oder unterschiedliche Ergänzungsmodule über Verbindungen elektrisch mit den Basiselementen und/oder dass wahlweise gleichartige und/oder unterschiedliche Ergänzungsmodule an unterschiedlichen Stellen der Basiselemente über Verbindungen elektrisch mit den Basiselement verbindbar sind, wobei die Basiselemente jeweils eine Mehrzahl voneinander beabstandeten Aufnahmen zum formschlüssigen Aufnehmen von gleichartigen und/oder unterschiedlichen Ergänzungsmodulen aufweist, wobei wenigstens zwei gleichartige und/oder unterschiedliche Ergänzungsmodule in unterschiedlichen Aufnahmen formschlüssig aufnehmbar sind und wobei die Aufnahmen der Basiselemente jeweils eine Öffnung zum Einführen der Ergänzungsmodule und an den den Öffnungen abgewandten Seiten der Aufnahmen wenigstens ein Verbindungselement aufweisen.

Erfindungsgemäß ist mithin erkannt worden, dass durch einen konsequenten modularen Aufbau wie beschrieben, sehr schnell und unkompliziert ein Transportroboter zusammengestellt und bei Bedarf an wechselnde Anforderungen angepasst werden kann. Um dies zu erreichen werden aus einem Transportrobotersystem nach Art eines Baukastens jeweils die Bauteile entnommen, die zur Zusammenstellung des jeweils besonders bevorzugten Transportroboters benötigt werden. Da die einzelnen Bauteile unterschiedlich sein können, kann jedes Bauteil nach bestimmten Kriterien gewählt werden.

Die Transportroboter umfassen wenigstens ein Basiselement zum körperlichen Aufbau des Transportroboters. Das Basiselement kann also eine Art Gerüst oder wenigstens ein Teil eines Gerüsts für den Aufbau des Transportroboters bilden, um weitere Komponenten hinzufügen zu können, wobei das wenigstens eine Basiselement bereits einzelne wesentliche Komponenten aufweisen kann, die dann nicht noch separat ergänzt werden müssen. Dies vereinfacht den Aufbau des

Transportroboters, schränkt zugleich aber etwas die Flexibilität bei Aufbau des Roboters ein. Bei wesentlichen Komponenten kann dieser vermeintliche Nachteil jedoch in Kauf genommen werden. Eine solche Komponente kann beispielsweise eine Steuereinrichtung zum Steuern des Transportroboters sein, derer es grundsätzlich bei einer Vielzahl von Anwendungen bedarf. Zudem kann die Steuereinrichtung über eine entsprechende Software angepasst werden, ohne dass die Steuereinrichtung als solche zwingend ausgetauscht werden müsste.

Zur Ergänzung des Basiselements mit Funktionselementen sind wenigstens zwei Ergänzungsmodule vorgesehen. Je nach Bedarf können es aber auch mehr als drei Ergänzungsmodule sein. Jedes Ergänzungsmodul dient dabei dem technischen Ausstatten des Transportroboters. Für den Transport der wenigstens einen Sendung dient eine Sendungsbox, die zur Aufnahme der jeweiligen Art von Sendungen geeignet ist. Die Sendungsbox kann daher ebenfalls bedarfsweise ausgetauscht werden, wenn die Größe oder Art der Sendungsbox nicht zu der wenigstens einen zu transportierenden Sendung passt.

Die wenigstens zwei Ergänzungsmodule sind dazu vorgesehen, elektrisch mit dem zugehörigen Basiselement verbunden zu werden, so dass das wenigstens eine Basiselement und jedes der Ergänzungsmodule korrespondierende Verbindungselemente aufweisen und dementsprechend jeweils über wenigstens eine elektrische Verbindung, die aus den korrespondierenden Verbindungselementen gebildet wird, elektrisch miteinander verbunden sind. Da ein Basiselement zur Verbindung mehrerer Ergänzungsmodule vorgesehen ist und zudem wenigstens eine Steuereinrichtung umfasst, ist zudem wenigstens ein Kabelbaum vorgesehen, der die einzelnen Ergänzungsmodule untereinander und/oder Ergänzungsmodule mit der Steuereinrichtung verbindet. Dazu verbindet der Kabelbaum letztlich die Verbindungselemente des Basiselements untereinander elektrisch.

Ein schnelles und unkompliziertes Zusammenstellen des Transportroboters kann zudem erreicht werden, indem das wenigstens eine Basiselement und die Ergänzungsmodule derart korrespondierend zueinander ausgebildet sind, dass jedes der Ergänzungsmodule an unterschiedlichen Stellen des Basiselements über elektrische Verbindungen mit dem Basiselement verbunden werden können. Dazu können die Verbindungselemente der Ergänzungsmodule wahlweise mit unterschiedlichen Verbindungselementen verbunden werden, ohne Veränderungen an dem Basiselement oder den Ergänzungsmodulen vornehmen zu müssen. Die Verbindungselemente der wenigstens zwei Ergänzungsmodule sind jeweils wahlweise direkt mit wenigstens zwei an unterschiedlichen Stellen vorgesehenen Verbindungselementen unter Ausbildung jeweils einer gemeinsamen Verbindung mit dem wenigstens einen Basiselement verbindbar.

Das Transportrobotersystem umfasst neben den Komponenten eines einzelnen modularen Transportroboters noch weitere Komponenten, aus denen dann jeweils bestimmte Komponenten ausgewählt werden können, um dann modular einen Transportroboter zusammenzustellen. Dabei können die unterschiedlichen Arten von Komponenten untereinander stets gleichartig ausgebildet sein. Besonders bevorzugt ist es jedoch, wenn wenigstens bestimmte Arten von Komponenten in unterschiedlicher Ausprägung vorhanden sind, um aus denen die jeweils am besten geeignete Komponente auszuwählen. Vorgesehen sind dabei Basiselemente zum körperlichen Aufbau der Transportroboter und unterschiedliche Arten von Ergänzungsmodulen zum technischen Ausstatten des Transportroboters. Wie beschrieben haben die Basiselemente und die Ergänzungsmodule korrespondierende Verbindungselemente zum elektrischen Verbinden der Basiselemente jeweils mit einer Mehrzahl von Ergänzungsmodulen, wobei die Basiselemente jeweils wenigstens einen Kabelbaum zum elektrischen Verbinden der Verbindungselemente des Basiselements untereinander aufweisen können.

Des Weiteren sind Steuereinrichtungen zum Steuern der Transportroboter vorgesehen, die bereits mit den Basiselementen verbunden sein oder noch verbunden werden können. Zudem sind die Basiselemente und die Ergänzungsmodule derart korrespondierend zueinander ausgebildet, dass wahlweise an einer Stelle der Basiselemente gleichartige und/oder unterschiedliche Ergänzungsmodule über Verbindungen elektrisch mit den Basiselementen verbunden werden können. Alternativ oder zusätzlich können aber auch wahlweise gleichartige und/oder unterschiedliche Ergänzungsmodule an unterschiedlichen Stellen der Basiselemente über Verbindungen elektrisch mit den Basiselementen verbunden werden. Auf diese Weise wird ein hohes Maß an Flexibilität und Austauschbarkeit bei der Zusammenstellung der Transportroboter erreicht.

Vorliegend werden unter Sendungen grundsätzlich unterschiedliche Gegenstände verstanden, die vorzugsweise mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Sendungen von Kurierdiensten, Transportunternehmen, Warehousing-Unternehmen oder Postunternehmen. Letztere können auch als Postsendungen bezeichnet werden. Bedarfsweise handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein. Bei Paketsendungen und anderen Sendungen handelt es sich in vielen Fällen um umverpackte Güter, wobei dann die Sendung die Verpackung und das darin verpackte Gut umfassen.

Da die Transportroboter dem Transport von Sendungen dienen, auch wenn die Sendungen sehr unterschiedlich ausfallen können und daher ganz allgemein auch als Stückgüter, Paketsendungen oder dergleichen bezeichnet werden könnten, könnten die Transportroboter auch als Sendungsroboter bezeichnet werden. Der Begriff Sendungsroboter brächte dabei zum Ausdruck, dass die Roboter insbesondere Sendungen transportieren. Der Begriff Transportroboter bringt dagegen insbesondere zum Ausdruck, dass der Roboter dem Transport dient, was in gleicher Weise richtig ist. Mithin wären die Begriffe Transportroboter und Sendungsroboter vorliegend bedarfsweise auch austauschbar oder könnten als synonym verstanden werden. Daraus folgt dann analog, dass das Transportrobotersystem grundsätzlich ebenso als Sendungsrobotersystem bezeichnet werden könnte. Der Einfachheit halber und zur Vermeidung von unnötigen Wiederholungen, werden nachfolgend trotz des vorstehend beschriebenen Umstands die Begriffe Transportroboter und Transportrobotersystem verwendet.

Der besseren Verständlichkeit halber und zur Vermeidung von unnötigen Wiederholungen werden nachfolgend zudem der modulare Transportroboter und das Transportrobotersystem gemeinsam beschrieben, ohne jeweils im Einzelnen zwischen dem modularen Transportroboter und dem Transportrobotersystem zu unterscheiden. Für den Fachmann ergibt sich jedoch anhand des Kontextes, welches Merkmal jeweils des modularen Transportroboters und/oder des Transportrobotersystems besonders bevorzugt ist.

Bei einer ersten besonders bevorzugten Ausgestaltung des modularen Transportroboters sind die Verbindungselemente wenigstens im Wesentlichen als Steckverbindungselemente ausgebildet und/oder ist die elektrische Verbindung wenigstens im Wesentlichen als elektrische Steckverbindung ausgebildet. Die Steckverbindungselemente können mithin einfach und schnell zum Verbinden ineinandergesteckt und/oder zum Trennen wieder auseinandergezogen werden. Der modulare Transportroboter kann mithin problemlos zusammengestellt und auch nachträglich wieder leicht verändert werden. Hinsichtlich der elektrischen Verbindung ist eine elektrische Steckverbindung aus denselben Gründen bevorzugt. Zur Bildung einer Steckverbindung können die Verbindungselemente Buchsenelemente und Steckerelemente umfassen, die vorzugsweise korrespondierend zueinander ausgebildet sind. Dies vereinfacht die Montage des Transportroboters. Bevorzugt kann es dabei sein, wenn die Verbindungen einzig durch ein Ineinanderstecken von korrespondierenden Verbindungselementen gefügt werden. Zwingend ist dies jedoch nicht. Es kann beispielsweise vorgesehen sein, dass die korrespondierenden Verbindungselemente zunächst ineinandergesteckt und anschließend zusätzlich mechanisch gesichert oder arretiert werden. Mit anderen Worten ist grundsätzlich eine Ausgestaltung wenigstens im Wesentlichen als Steckverbindungselement und/oder Steckverbindung ausreichend.

Alternativ oder zusätzlich zu den elektrischen Steckverbindungen bzw. Steckverbindungselementen, die sich wenigstens in einer Richtung, insbesondere wenigstens in zwei zueinander senkrechten Richtungen, durch einen Formschluss auszeichnen und/oder ein schnelles sowie intuitives Positionieren, Zentrieren und/oder Ausrichten der Module erlauben, kommen auch andere Fügemethoden in Frage. Diese können kraftschlüssige oder stoffschlüssige Fügemethoden sein, die jedoch bevorzugt wieder lösbar sind, und zwar weiter bevorzugt ohne einen unverhältnismäßigen Aufwand. Beispielsweise kommt auch ein Fügen mittels magnetischer Feldkraft, ein induktives Verbinden und/oder ein Verbinden über Funk, wobei hier grundsätzlich jede kabellose Verbindung zwischen Sender und Empfänger verstanden werden kann, in Frage.
ist wenigstens eine Kommunikationseinrichtung für eine Kommunikation zwischen dem Transportroboter und einer externen Kontrollstation vorgesehen. Die Kommunikation kann aber auch zwischen mehreren Transportrobotern erfolgen, und zwar insbesondere zwischen den Transportrobotern eines Schwarms von Transportrobotern, so dass diese sich über das weitere Vorgehen gegenseitig abstimmen können. Besonders zweckmäßig kann es grundsätzlich sein, wenn die Kommunikation beispielsweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), übertragen werden. Andere Wege der Kommunikation sind bekannt und können grundsätzlich auch genutzt werden. Zudem wird unter einer Kommunikation bevorzugt ein Informationsaustausch in beiden Richtungen verstanden, was in dem gewählten Begriff zum Ausdruck kommt, aber nicht zwingend erforderlich ist. Beispielsweise kann der Transportroboter über die Kommunikationseinrichtung eine Information über den Standort und/oder den Status des Transportroboters übermitteln. Diese kann den Beladungszustand, den nächsten anzufahrenden Abgabeort, einen Akkustand, eine Funktionsstörung oder dergleichen betreffen. Der Transportroboter kann aber auch Informationen empfangen, die Ortsangaben für eine Abgabe und/oder Aufnahme einer Sendung enthalten können, die der Transportroboter dann sofort und zu geeigneter Zeit anfährt. Wünschenswert kann es auch sein, wenn der Transportroboter einen Alarm aussendet, wenn er liegengeblieben ist, beschädigt worden ist, festgehalten wird und/oder entwendet worden ist. Außerdem können im Falle einer Flotte von Transportrobotern die Positionen und Bewegungen der Flotte überwacht und ausgewertet werden, wenn die Transportroboter in regelmäßigen Abständen Ortsinformationen aussenden, so dass das Abliefern und/oder Abholen von vielen einzelnen Sendungen effizienter gestaltet werden kann.

Alternativ oder zusätzlich kann wenigstens eine Antriebseinrichtung zum Bewegen des Transportroboters zu einem Aufnahmeort und/oder Abgabeort der Sendungen vorgesehen sein. So kann der Transportroboter Sendungen abliefern und/oder aufnehmen. Dabei kann der Transportroboter von Ort zu Ort fahren, fliegen oder schwimmen. Grundsätzlich kann der Transportroboter Fahren, Fliegen und/oder Schwimmen auch kombinieren. Wenn wenigstens ein Signalrouter vorgesehen ist, kann dieser bestimmte Informationen von bestimmten Ergänzungsmodulen an andere Ergänzungsmodule weiterleiten. Auf diese Weise kann eine Steuerung oder dergleichen des Transportroboters erfolgen, ohne dass die Steuerungseinrichtung selbst beteiligt sein muss. Die Weiterleitung von Signalen durch den wenigstens einen Signalrouter kann unspezifisch sein oder jeweils nur bestimmte Arten von Signalen betreffen. In dem letztgenannten Fall können dann für unterschiedliche Arten von Signalen unterschiedliche Signalrouter vorgesehen sein.

Erfindungsgemäß weist das wenigstens eine Basiselement eine Mehrzahl voneinander beabstandeten Aufnahmen zum formschlüssigen, Aufnehmen von Ergänzungsmodulen auf.

Dann können die Ergänzungsmodule beispielsweise einfach in die Aufnahmen des Basiselements eingeschoben werden, wo sie dann gegen ein versehentliches Herausfallen gesichert sein können. Dem Gedanken der Modularität wird dadurch Rechnung getragen, dass die wenigstens zwei Ergänzungsmodule in unterschiedlichen Aufnahmen formschlüssig aufgenommen sind. Aufnahmen und Ergänzungsmodule können dabei in unterschiedlicher Weise miteinander kombiniert werden.

Da die Aufnahmen eine Öffnung zum Einführen der Ergänzungsmodule aufweisen, kann ein sicheres und zuverlässiges Verbinden von Ergänzungsmodulen und Basiselementen erreicht werden. Dies gilt dann, weil an den den Öffnungen abgewandten Seiten der Aufnahmen wenigstens ein Verbindungselement, insbesondere Steckverbindungselement, vorgesehen ist. Die entsprechende Steckverbindung kann dann beim Einschieben eines Ergänzungsmoduls in eine Aufnahme vorzugsweise zwangsweise geschlossen werden. Es sind aber auch Verbindungen denkbar, die ohne ein gegenseitiges Einstecken geschlossen werden und, vorzugsweise, dennoch wieder lösbar sind.

Für eine Modularität und Flexibilität sind die Aufnahmen vorzugsweise gleichartig, insbesondere in gleicher Größe, ausgebildet. Um dann jedoch zudem dem Umstand Rechnung tragen zu können, dass einzelne Ergänzungsmodule aufgrund der darin verbauten Komponenten größer sind als die Aufnahmen, kann wenigstens ein Ergänzungsmodul gleichzeitig in zwei benachbarten Aufnahmen des wenigstens einen Basiselements aufgenommen sein. Damit die Trennwand zwischen zwei Aufnahmen dann das Verbinden nicht behindert, kann das wenigstens eine Ergänzungsmodul eine die zwei benachbarten Aufnahmen trennende Wand wenigstens teilweise in einer Aussparung des Ergänzungsmoduls aufnehmen. Zudem oder alternativ kann es zweckmäßig sein, die Verbindungselemente der beiden Aufnahmen für die Anbindung des entsprechenden Ergänzungsmoduls zu nutzen. Dieses kann dann mit jeweils einem jeder Aufnahme zugeordneten Verbindungselement unter Bildung einer entsprechenden Verbindung verbunden sein. Hier bietet es sich der einfachen Verbindbarkeit und/oder Lösbarkeit halber an, wenn es sich bei dem Verbindungselement um ein Steckverbindungselement bzw. der Verbindung um eine Steckverbindung handelt.

Die elektrische Verbindung kann auch zu einer mechanischen Arretierung der Ergänzungsmodule am Basiselement beitragen, und zwar insbesondere dann, wenn es sich bei der elektrischen Verbindung um eine elektrische Steckverbindung handelt. Eine kraftschlüssige und/oder stoffschlüssige Verbindung wäre aber alternativ oder zusätzlich auch denkbar. Wenn diese mechanische Arretierung nicht ausreicht, oder die elektrischen Verbindungen entlastet werden sollen, kann das wenigstens eine Basiselement, bedarfsweise zusätzlich, mechanisch, vorzugsweise jeweils über wenigstens eine Rastverbindung oder eine magnetische Verbindung, mit den wenigstens zwei Ergänzungsmodulen verbunden sein. Diese mechanischen Verbindungen können bevorzugt an den den Öffnungen abgewandten Seiten der Aufnahmen vorgesehen sein. Die mechanischen Verbindungen können dann sehr einfach und zuverlässig gefügt werden.

Grundsätzlich müssen die Steuerungseinrichtung, die Kommunikationseinrichtung, die Antriebeinrichtung und/oder der Signalrouter nicht jeweils einem separaten Ergänzungsmodul zugeordnet sein, obwohl dies denkbar wäre. Die Einrichtungen können bedarfsweise auch Teil des Basiselements sein, wenn dies zweckmäßig ist. Die Einrichtungen können aber auch zusammen mit weiteren Funktionseinrichtungen in einem gemeinsamen Ergänzungsmodul aufgenommen sein, wenn dies zweckmäßig ist. Um die Modularität jedoch zu steigern, kann die wenigstens eine Steuereinrichtung in einem Ergänzungsmodul in Form eines Steuermoduls, die wenigstens eine Kommunikationseinrichtung in einem Ergänzungsmodul in Form eines Kommunikationsmoduls und/oder die wenigstens eine Antriebseinrichtung in einem Ergänzungsmodul in Form eines Antriebsmoduls vorgesehen sein.

Alternativ oder zusätzlich kann der Modularität und der Flexibilität des Transportroboters dadurch Rechnung getragen werden, dass wenigstens ein Ergänzungsmodul als Sendungsbox zum Transport von Sendungen, als Antriebsmodul zum Bewegen des Transportroboters zu einem Aufnahmeort und/Abgabeort der Sendungen, als Achsmodul zur Montage eines Rades, als Kommunikationsmodul für eine Kommunikation zwischen dem Transportroboter und einer externen Kontrollstation, als Steuerungsmodul zum Steuern des Transportroboters, als Batteriemodul für die Spannungsversorgung des Transportroboters, als Beleuchtungsmodul zur Beleuchtung des Transportroboters und/oder der Umgebung des Transportroboters, als Sensormodul zum Erfassen der Umgebung des Transportroboters und/oder als Solarmodul zum Versorgen der Transportroboter mit über wenigstens ein Solarpaneel gewonnenem Strom ausgebildet ist. So können in einfacher Weise die verschiedenen angesprochenen Funktionalitäten unabhängig voneinander durch separate Ergänzungsmodule sehr flexibel bereitgestellt werden.

Damit das Basiselement möglichst vielseitig verwendbar ist, kann der wenigstens eine Kabelbaum, vorzugsweise bestimmte, Leitungen zur Spannungsversorgung von wenigstens einem Ergänzungsmodul, Leitungen zur Übertragung von Steuerbefehlen und/oder Informationen zwischen Ergänzungsmodulen und/oder zwischen wenigstens einem Ergänzungsmodul und der wenigstens einen Steuereinrichtung und/oder Kommunikationseinrichtung aufweisen. Durch eine Trennung von Leitungen für die Spannungsversorgung, Informationen und Steuerbefehle können unerwünschte Wechselwirkungen zwischen den einzelnen Übertragungen vermieden werden. Dies gilt insbesondere deshalb, weil sich je nach der jeweiligen Zusammenstellung des Transportroboters sehr unterschiedliche Leitungswege und Übertragungsanforderungen ergeben können, die nicht oder nur bedingt vorab auf mögliche Störungen durchdacht werden können.

Um hinsichtlich der verwendeten Ergänzungsmodule nicht oder weniger beschränkt zu sein, können wenigstens zwei, insbesondere gleichartige, Basiselemente verwendet werden, die, vorzugsweise an einer Oberseite und/oder einer Unterseite, mit korrespondierenden Basisverbindungselementen versehen sind. Die korrespondierenden Basisverbindungselemente erlauben ein einfaches Verbinden. Im Falle von Basissteckverbindungselementen wird bedarfsweise ein einfaches Aufeinanderstecken der Basiselemente unter Ausbildung einer Basisverbindung, insbesondere Basissteckverbindung ermöglicht. Konstruktiv ist es hinsichtlich des Aufbaus des Transportroboters bevorzugt, wenn wenigstens zwei Basiselemente, vorzugsweise übereinander, über eine durch die korrespondierenden Basisverbindungselemente gebildete Basisverbindung miteinander verbunden sind.

Dabei können die wenigstens zwei Basiselemente neben der Basisverbindung zusätzlich noch mechanisch, vorzugsweise über Rastverbindungen oder magnetische Verbindungen, miteinander verbunden sein, insbesondere, wenn es sich bei der Basissteckverbindung um eine wenigstens vornehmlich formschlüssige Basissteckverbindung handelt. So kann ein versehentliches Trennen der Basiselemente vermieden werden. Zudem können die elektrischen Basisverbindungen zwischen den Basiselementen mechanisch entlastet werden. Konstruktiv ist es dann zweckmäßig, wenn beispielsweise die mechanischen Verbindungen an den einander zugewandten Rändern der Basiselemente vorgesehen sind.

Für eine einfache und flexible Verbindung der Sendungsbox mit weiteren Elementen des Transportroboters bietet es sich an, wenn die wenigstens eine Sendungsbox, vorzugsweise an einer Oberseite und/oder einer Unterseite, wenigstens ein Basisverbindungselement zum Verbinden mit einem Basiselement und/oder mit einer weiteren Sendungsbox aufweist. So lässt sich dann bedarfsweise die Sendungsbox sowohl mit einer weiteren Sendungsbox verbinden als auch mit einem Basiselement. Wenn die wenigstens eine Sendungsbox zudem an einer Oberseite und/oder einer Unterseite zueinander und/oder zu den Basisverbindungselementen wenigstens eines Basiselements korrespondierende Basisverbindungselemente aufweist, kann die Sendungsbox an der Oberseite und der Unterseite in einfacher Weise mit weiteren Sendungsboxen und/oder Basiselementen verbunden werden. Dabei ist es aus konstruktiver Sicht und im Hinblick auf das Fügen besonders einfach und zweckmäßig, wenn die Basisverbindungselemente als Basissteckverbindungselemente bzw. die Basisverbindungen als Basissteckverbindungen ausgebildet sind.

Des Weiteren kann bedarfsweise wenigstens ein Solarpaneel vorgesehen sein, so dass nicht die insgesamt benötigte Energie in Form von Batterien mitgeführt werden muss. Als Solarpaneel wird vorliegend auch ein solches verstanden, das beispielsweise eine Solarfolie aufweist oder wenigstens im Wesentlichen aus einer Solarfolie gebildet ist. Wenigstens ein Teil der benötigten elektrischen Energie kann mittels wenigstens eines Solarpaneels unterwegs gewonnen werden. Das Solarpaneel kann dann, vorzugsweise an einer Unterseite, wenigstens ein Basisverbindungselement zum Verbinden mit einem Basiselement und/oder mit einer weiteren Sendungsbox aufweisen. Dies erlaubt eine flexible Verbindung insbesondere an der Oberseite des Transportroboters je nach dessen Aufbau. Dabei kann dann das Basisverbindungselement des wenigstens einen Solarpaneels mit wenigstens einem Basisverbindungselement wenigstens eines Basiselements und/oder einer Sendungsbox korrespondierend ausgebildet sein. So wird auch hier ein hohes Maß an Austauschbarkeit und damit Flexibilität erzeugt. Dabei ist es auch hier konstruktiv und funktional besonders einfach und zweckmäßig, wenn die Basisverbindungselemente als Basissteckverbindungselemente bzw. die Basisverbindungen als Basissteckverbindungen ausgebildet sind.

Zum Aufbau des Transportroboters bietet sich insbesondere ein geschichteter Aufbau mit mehreren Ebenen an. Mithin kann es zweckmäßig sein, wenn das wenigstens eine Basiselement, die wenigstens eine Sendungsbox und/oder das wenigstens eine Solarpaneel in mehreren Ebenen übereinander angeordnet sind und dass, vorzugsweise, das wenigstens eine Basiselement, die wenigstens eine Sendungsbox und das wenigstens eine Solarpaneel untereinander direkt, insbesondere über eine Rastversbindung, verbunden sind.

Für einen effizienten Betrieb und zur Vergrößerung des Aktionsradius des Transportroboters kann es sich alternativ oder zusätzlich anbieten, wenn der Transportroboter wenigstens eine elektromotorische Bremse aufweist. Diese kann dann zum Umwandeln von Bremsenergie in elektrische Energie und bedarfsweise zum Speichern der so wiedergewonnenen elektrischen Energie in einer Batterie genutzt werden, wozu die elektromotorische Bremse dann vorzugsweise mit der entsprechenden Batterie und/oder einem Batteriemodul verbunden ist. Die Umwandlung der Bremsenergie kann einfach und zuverlässig erfolgen, wenn die elektromotorische Bremse eine Wirbelstrombremse aufweist.

Für den zuverlässigen und beschädigungsfreien Transport der Sendungen bietet es sich grundsätzlich an, wenn die wenigstens eine Sendungsbox wenigstens eine, vorzugsweise durch eine Klappe und/oder Tür verschließbare, Öffnung zum Einlegen und Herausnehmen wenigstens einer Sendung aufweist. So kann die Sendung nicht nur bedarfsweise vor Umwelteinflüssen, sondern auch vor Diebstahl geschützt werden. Letzteres ist insbesondere der Fall, wenn ein Verriegelungsmittel, insbesondere Schloss zum Verriegeln der Klappe und/oder Tür in einer die Öffnung verschließenden Stellung vorgesehen ist. Wenn das Verriegelungsmittel über die Steuereinrichtung von einer geöffneten in eine geschlossene Stellung verstellt wird, ist hierzu kein Bediener erforderlich und kann das Öffnen des Verriegelungsmittels bzw. der Sendungsbox nicht ohne Weiteres manipuliert werden.

Bei einer ersten besonders bevorzugten Ausgestaltung des Transportrobotersystems sind Kommunikationseinrichtungen für eine Kommunikation zwischen Transportrobotern und externen Kontrollstationen, Antriebseinrichtungen zum Bewegen der Transportroboter zu einem Aufnahmeort und/oder Abgabeort der Sendungen und/oder Signalrouter zur Weiterleitung von Signalen, insbesondere von wenigstens einer bestimmten Art von Signalen, zwischen Ergänzungsmodulen vorgesehen. So können die entsprechenden Funktionalitäten, falls erforderlich wahlweise, bereitgestellt werden. Es kann sich dabei jeweils um gleichartige Funktionseinrichtungen handeln, so dass sie entweder immer vorgesehen sind oder nur wahlweise vorgesehen werden. Die Funktionseinrichtungen einer Art können aber auch jeweils unterschiedlich ausgebildet sein. Dies eröffnet die Möglichkeit, aus mehreren Funktionseinrichtungen einer Art die Funktionseinrichtung auszuwählen, die für den jeweiligen Anwendungsfall am besten geeignet ist.

Eine hohe Flexibilität und Austauschbarkeit kann auch erreicht werden, da die Basiselemente jeweils eine Mehrzahl voneinander beabstandeten Aufnahmen zum formschlüssigen Aufnehmen von gleichartigen und/oder unterschiedlichen Ergänzungsmodulen aufweist. Es stehen dann entweder gleichartige und/oder unterschiedliche Ergänzungsmodule einer bestimmten Art zur Verfügung, aus denen dann ausgewählt werden kann, um wenigstens einen Transportroboter zusammenzustellen bzw. aufzubauen, ohne dass dies einen Einfluss auf die Aufnahmen bzw. auf die Form der Ergänzungsmodule haben muss. Mithin wird erreicht, dass wenigstens zwei gleichartige und/oder unterschiedliche Ergänzungsmodule in unterschiedlichen Aufnahmen formschlüssig aufgenommen werden können. Zudem ist der Einfachheit halber vorgesehen, dass die Aufnahmen der Basiselemente jeweils eine Öffnung zum Einführen der Ergänzungsmodule und an den den Öffnungen abgewandten Seiten der Aufnahmen wenigstens ein Verbindungselement aufweisen. Dies vereinfacht nicht nur das mechanische Verbinden der Ergänzungsmodule, sondern auch wenigstens das elektrische Verbinden der Ergänzungsmodule mit dem jeweiligen Basiselement. Besonders einfach und zweckmäßig ist es dabei, wie bereits beschrieben, wenn die Verbindungselemente bzw. die, insbesondere elektrischen, Verbindungen als Steckverbindungselemente bzw. Steckverbindungen ausgebildet sind.

Um auch größere Ergänzungsmodule verbauen zu können, ohne die Teilung der Basiselemente anpassen zu müssen, kann ein Ergänzungsmodul gleichzeitig in zwei benachbarten Aufnahmen der Basiselemente aufgenommen werden. Dabei bietet es sich an, wenn die Ergänzungsmodule gleichzeitig mit Verbindungselementen der beiden benachbarten Aufnahmen unter Bildung einer Verbindung zu verbinden sind. Alternativ oder zusätzlich kann eine die zwei benachbarten Aufnahmen trennende Wand wenigstens teilweise in einer Aussparung der Ergänzungsmodule aufgenommen werden, wenn diese entsprechend angebaut werden. Auch hier ist es
der Einfachheit und der Funktionalität halber bevorzugt, wenn die Verbindungselemente bzw. die, insbesondere elektrischen, Verbindungen als Steckverbindungselemente bzw. Steckverbindungen ausgebildet sind.

Die Basiselemente können zusätzlich zu einer elektrischen Verbindung, insbesondere einer wenigstens teilweise formschlüssigen Steckverbindung, auch mechanisch, vorzugsweise über Rastverbindungen oder magnetische Verbindungen, und/oder stoffschlüssig mit Ergänzungsmodulen verbindbar sein. So kann einem versehetlichen Lösen entgegengewirkt werden. Zudem können die mechanischen Verbindungen an den den Öffnungen abgewandten Seiten der Aufnahmen vorgesehen sein. So lassen sich die mechanischen Verbindungen leicht fügen. Alternativ oder zusätzlich ist auch ein Fügen mittels magnetischer Feldkraft, ein induktives Verbinden und/oder ein Verbinden über Funk, wobei hier grundsätzlich jede kabellose Verbindung zwischen Sender und Empfänger verstanden werden kann, denkbar.

Wenn die Steuereinrichtungen in Ergänzungsmodulen in Form von Steuermodulen, die Kommunikationseinrichtungen in Ergänzungsmodulen in Form von Kommunikationsmodulen und/oder die Antriebseinrichtungen in Ergänzungsmodulen in Form von Antriebsmodulen vorgesehen sind, lassen sich diese Funktionseinrichtungen leicht verbauen und austauschen, und zwar sowohl gegen gleichartige oder aber auch gegen andersartige Funktionseinrichtungen.

Zudem können grundsätzlich Ergänzungsmodule vorgesehen sein, die beispielsweise als gleichartige und/oder unterschiedliche Sendungsboxen zum Transport von Sendungen, als gleichartige und/oder unterschiedliche Antriebsmodule zum Bewegen des Transportroboters zu einem Aufnahmeort und/oder Abgabeort der Sendungen, als gleichartige und/oder unterschiedliche Achsmodule zur Montage eines Rades, als gleichartige und/oder unterschiedliche Kommunikationsmodule für eine Kommunikation zwischen dem Transportroboter und einer externen Kontrollstation, als gleichartige und/oder unterschiedliche Steuerungsmodule zum Steuern des Transportroboters, als Batteriemodule für die Spannungsversorgung des Transportroboters, als gleichartige und/oder unterschiedliche Beleuchtungsmodule zur Beleuchtung des Transportroboters und/oder der Umgebung der Transportroboter, als gleichartige und/oder unterschiedliche Sensormodule zum Erfassen der Umgebung der Transportroboter und/oder als gleichartige und/oder unterschiedliche Solarmodule zum Versorgen der Transportroboter mit über wenigstens ein Solarpaneel gewonnenem Strom ausgebildet sind. Insbesondere wenn die Module eines Typs sich funktional unterscheiden, können für unterschiedliche Anwendungen stets spezielle und in hohem Maße geeignete Transportroboter zusammengestellt werden.

Um eine hohe Funktionalität und Flexibilität bereitzustellen, können die Kabelbäume der gleichartigen und/oder unterschiedlichen Basiselemente, vorzugsweise bestimmte, Leitungen zur Spannungsversorgung von wenigstens einem Ergänzungsmodul, Leitungen zur Übertragung von Steuerbefehlen und/oder Informationen aufweisen. Die Steuerbefehle und/oder Informationen könne dabei über die entsprechenden Kabelbäume zwischen Ergänzungsmodulen und/oder zwischen wenigstens einem Ergänzungsmodul und der wenigstens einen Steuereinrichtung und/oder Kommunikationseinrichtung geleitet werden.

Gleichartige und/oder unterschiedliche Basiselemente können, vorzugsweise an einer Oberseite und/oder einer Unterseite, jeweils mit korrespondierenden Basisverbindungselementen, der Einfachheit halber insbesondere Basissteckverbindungselementen, versehen sein, um eine Verbindung der Basiselemente untereinander und/oder mit weiteren Elementen zu vereinfachen. Dabei können die Basiselemente, vorzugsweise übereinander, über eine durch die korrespondierenden Basisverbindungselemente gebildete Basisverbindung, insbesondere Basissteckverbindung, miteinander verbunden werden. Dies ist einfach und erhöht zudem die Flexibilität.

Wenn die gleichartigen und/oder unterschiedlichen Basiselemente zusätzlich zu den Basisverbindungen, insbesondere in Form von wenigstens teilweise formschlüssigen Basissteckverbindungen, mechanisch, vorzugsweise über Rastverbindungen, miteinander verbunden werden können, können zuverlässigere und haltbarere Transportroboter gebildet werden. Konstruktiv einfach lassen sich entsprechende mechanische Verbindungen bereitstellen, wenn die Rastverbindungen an den einander zugewandten Rändern der Basiselemente vorgesehen sind. Alternativ oder zusätzlich ist auch ein Fügen mittels magnetischer Feldkraft, ein induktives Verbinden und/oder ein Verbinden über Funk, wobei hier grundsätzlich jede kabellose Verbindung zwischen Sender und Empfänger verstanden werden kann, denkbar.

Sind gleichartige und/oder unterschiedliche Sendungsboxen vorgesehen, können diese beispielsweise nach Art und/oder Anzahl ausgesucht werden, um entsprechende Transportroboter zu bilden. Bevorzugt ist dabei, wenn die Sendungsboxen an einer Oberseite und/oder einer Unterseite, wenigstens ein Basisverbindungselement zum Verbinden mit einem Basiselement und/oder mit einer weiteren Sendungsbox aufweisen. Dies vereinfacht die Montage und erhöht die Flexibilität bei der Montage der Transportroboter. Wenn die wenigstens eine Sendungsbox an einer Oberseite und/oder einer Unterseite zueinander und/oder zu den Basisverbindungselementen der Basiselemente korrespondierende Basisverbindungselemente aufweisen, wird die Montage weiter vereinfacht und flexibler gestaltet. Beides gilt insbesondere dann, wenn es sich bei den Basisverbindungselementen um Basissteckverbindungselemente bzw. bei den Basisverbindungen um Basissteckverbindungen handelt.

Ebenso können gleichartige und/oder unterschiedliche Solarpaneele vorgesehen sein, um diese nach Bedarf, Anzahl und/oder Art für die Fertigung von Transportrobotern auszuwählen. Ist dann an den Unterseiten der Solarpaneele ein Basisverbindungselement, insbesondere Basissteckverbindungselement, zum Verbinden mit einem Basiselement und/oder mit einer weiteren Sendungsbox vorgesehen, wird die Montage in bekannter Weise vereinfacht und flexibler gestaltet. Die Basiselemente, die Sendungsboxen und/oder die Solarpaneele können in mehreren Ebenen übereinander angeordnet werden. So lässt sich beispielsweise ein Schichtaufbau erreichen, bei dem verschiedene Funktionseinrichtungen auf unterschiedlichen Ebenen angeordnet werden. Ja nach dem entsprechenden Schichtaufbau kann dann auch die entsprechende Anordnung variiert werden. Dabei sind dann die Basiselemente, die Sendungsboxen und/oder die Solarpaneele untereinander direkt, insbesondere über eine Rastversbindung, verbindbar, was zu einer einfachen und flexiblen Montage der Transportroboter beiträgt.

Wenn die wenigstens eine Sendungsbox wenigstens eine, vorzugsweise durch eine Klappe und/oder Tür verschließbare, Öffnung zum Einlegen und Herausnehmen wenigstens einer Sendung aufweist, kann die Sendung zuverlässig und beschädigungsfrei transportiert werden. Hierzu sind dann vorzugsweise Verriegelungsmittel, insbesondere in Form eines Schlosses zum Verriegeln der Klappe und/oder Tür in einer die Öffnung verschließenden Stellung vorgesehen. Diese könne dann die Öffnung der Klappe und/oder Tür unter bestimmten Vorgaben bewirken oder zulassen, wenn dies beispielsweise über eine Steuerungseinrichtung des Transportroboters gesteuert wird.

Nachfolgend wird die Erfindung anhand einer lediglich ein Ausführungsbeispiel darstellenden Zeichnung näher erläutert. In der Zeichnung zeigt
- Fig. 1: einen aus einem erfindungsgemäßen Transportrobotersystem zusammengestellten erfindungsgemäßen Transportroboter in einer perspektivischen Ansicht,
- Fig. 2: den Transportroboter aus Fig. 1 in einer Explosionsdarstellung,
- Fig. 3A-B: ein Basiselement des Transportroboters aus Fig. 1 in einer perspektivischen Ansicht und entlang eines Schnitts entlang einer Ebene parallel zum Basiselement,
- Fig. 4: ein Ergänzungsmodul des Transportroboters aus Fig. 1 in einer perspektivischen Ansicht,
- Fig. 5: ein Ergänzungsmodul größerer Abmessung des Transportroboters aus Fig. 1 in einer perspektivischen Ansicht,
- Fig. 6: ein Steuerungsmodul und/oder Kommunikationsmodul des Transportroboters aus Fig. 1 in einer perspektivischen Ansicht,
- Fig. 7: ein Antriebsmodul zum Fahren des Transportroboters aus Fig. 1 in einer perspektivischen Ansicht,
- Fig. 8: ein Rad des Antriebsmoduls aus Fig. 7 in einer perspektivischen Ansicht,
- Fig. 9: ein Antriebsmodul zum Fliegen des Transportroboters aus Fig. 1 in einer perspektivischen Ansicht,
- Fig. 10: ein Beleuchtungsmodul und/oder Sensormodul des Transportroboters aus Fig. 1 in einer perspektivischen Ansicht,
- Fig. 11: ein Batteriemodul des Transportroboters aus Fig. 1 in einer perspektivischen Ansicht,
- Fig. 12: ein Solarpaneel des Transportroboters aus Fig. 1 in einer perspektivischen Ansicht und
- Fig. 13: eine Sendungsbox des Transportroboters aus Fig. 1 in einer perspektivischen Ansicht.

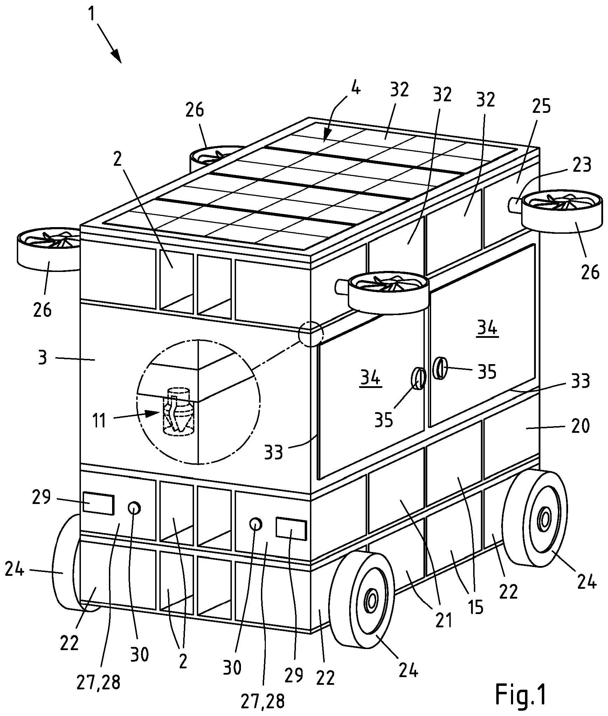

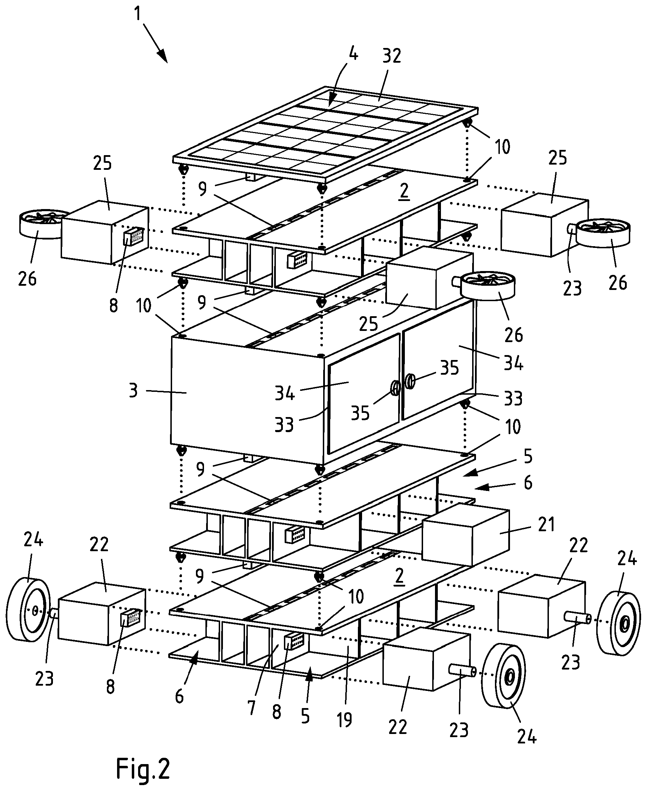

In der Fig. 1 ist ein modular aufgebauter Transportroboter 1 dargestellt, der aus Komponenten eines Transportrobotersystems zusammengesetzt worden ist. Bei dem dargestellten und insoweit bevorzugten Transportroboter 1 sind drei Basiselemente 2 vorgesehen, die gleichartig aufgebaut und übereinander angeordnet sind. Dabei ist zwischen dem obersten Basiselement 2 und den unteren beiden Basiselementen 2 eine Sendungsbox 3 vorgesehen, in der die Sendungen zum Transport aufgenommen werden können, sei es zum Abliefern oder zum Abholen von Sendungen. Auf dem oberen Basiselement 2 ist zudem noch ein Solarpaneel 4 angebracht, um Strom für den Transportroboter 1 zu erzeugen. Der Zusammenbau und die einzelnen Komponenten des Transportroboters 1 sind besser veranschaulicht in der Explosionsdarstellung gemäß Fig. 2 dargestellt. Der besseren Übersichtlichkeit halber sind jedoch einige der in der Fig. 1 dargestellten Ergänzungsmodule in der Fig. 2 weggelassen worden.

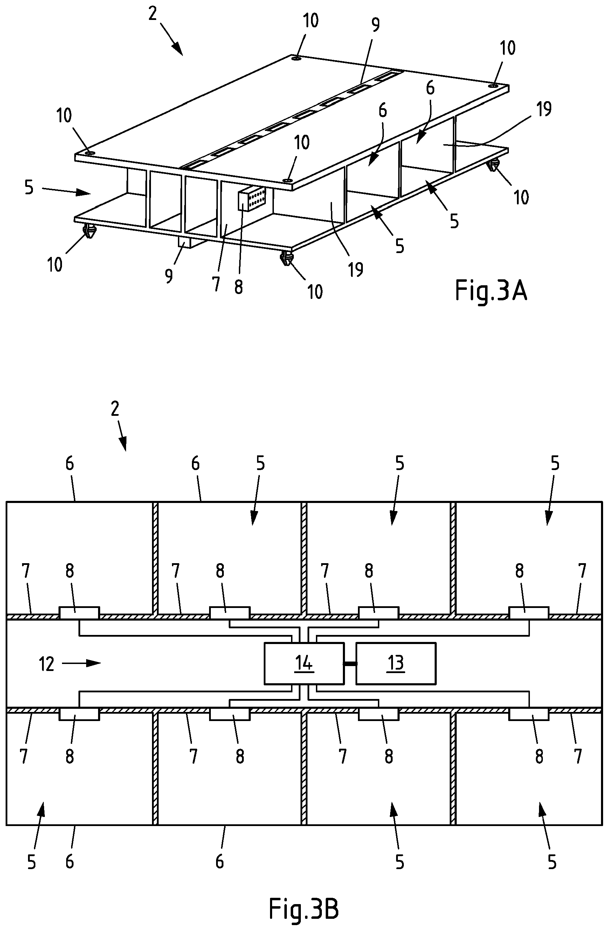

Die beispielhaft im Detail in Fig. 3A dargestellten Basiselemente 2 sind erkennbar gleich aufgebaut, auch wenn dies nicht zwingend erforderlich wäre, und weisen eine Oberseite und eine Unterseite auf, zwischen denen seitliche Aufnahmen 5 vorgesehen sind. Die Aufnahmen 5 weisen jeweils eine seitliche Öffnung 6 und an einer inneren Rückwand 7 jeweils ein elektrisches Verbindungselement 8 in Form eines elektrischen Steckverbindungselements auf. Es könnten grundsätzlich auch jeweils mehrere Verbindungelemente 8 vorgesehen sein, wovon vorliegend der Einfachheit halber jedoch Abstand genommen worden ist. Die Verbindungselemente 8 sind jedoch so ausgeführt, dass grundsätzlich eine Vielzahl von einzelnen Verbindungen für eine Spannungsversorgung, eine Übertragung von Informationen und/oder Steuerbefehlen möglich ist, ohne dass dafür jeweils separate Verbindungselemente 8 bzw. Verbindungen von Nöten wären.

Zudem sind an der Oberseite und an der Unterseite der Basiselemente 2 elektrische Basisverbindungselemente 9 in Form von Basissteckverbindungselementen vorgesehen, die korrespondierend zueinander ausgebildet sind. Vorliegend ist jeweils das obere Basisverbindungselement 9 als Buchse und das untere Basisverbindungselement 9 als Stecker ausgebildet. Zwingend ist dies jedoch nicht. Über die Basisverbindungselemente 9 können beim Zusammenstecken oder Stapeln der Basiselemente 2 elektrische Basisverbindungen, in Form von elektrischen Basissteckverbindungen gebildet werden. So können die Basiselemente 2 des Transportroboters 1 elektrisch miteinander verbunden werden.

Die Basiselemente 2, die Sendungsbox 3 und das Solarpaneel 4 werden zudem noch untereinander mechanisch verbunden, wozu all diese Komponenten korrespondierende Verbindungsmittel 10 aufweisen. Diese erlauben es bei richtiger Zusammenstellung, eine Rastverbindung 11 zwischen den Komponenten zu bewirken. Dabei weisen die Basiselemente 2 und die Sendungsbox 3 an der Oberseite und der Unterseite randseitig jeweils korrespondierende Verbindungsmittel 10 auf, die ein Stapeln von Basiselementen 2 und Sendungsboxen 3 ermöglichen. Einzig das Solarpaneel 4 weist lediglich an der Unterseite entsprechende Verbindungsmittel 10 auf, da das dargestellte und insoweit bevorzugte Solarpaneel 4 grundsätzlich an der Oberseite des Transportroboters 1 montiert wird. Rastverbindungen 11 können schnell gefügt werden. Dies gilt aber bedarfsweise auch für magnetische Verbindungsmittel. Grundsätzlich können aber auch andere mechanische Verbindungen vorgesehen sein.

Bei den dargestellten und insoweit bevorzugten Basiselementen 2, wie sie beispielhaft in einer Schnittansicht in Fig. 3B dargestellt sind, sind die einzelnen elektrischen Verbindungselemente 8 ebenso wie die Basisverbindungselemente 9 mit einem Kabelbaum 12 verbunden, der in einem zentralen Bereich der Basiselemente 2 angeordnet ist. An den Kabelbaum 12 angeschlossen ist eine Steuereinrichtung 13, die der Steuerung des Transportroboters 1 dient, aber auch an anderer Stelle vorgesehen sein kann. Insbesondere kann die Steuereinrichtung 13 etwa in Form eines Steuerungsmoduls über ein Verbindungselement 8 an ein Basiselement 2 angeschlossen sein, wenn ein leichter Austausch der Steuerungseinrichtung 13 gewünscht ist.

Darüber hinaus ist bei dem dargestellten und insoweit bevorzugten Basiselement 2 ein Router 14 vorgesehen, der der Weiterleitung und Verteilung von bestimmten Signalen dient. Der Router 14 kann dabei unterschiedliche Arten von Signalen, etwa von unterschiedlichen Arten von Ergänzungsmodulen an unterschiedliche Arten von Ergänzungsmodulen weiterleiten, wenn es keiner Verarbeitung der Signale in der Steuerungseinrichtung 13 bedarf. Die Verarbeitung bzw. Umwandlung der Signale, bei denen es sich insbesondere um Steuerbefehle oder Informationen handeln kann, kann auch eigenständig in wenigstens einem Ergänzungsmodul erfolgen. Es kann aber auch vorgesehen sein, dass unterschiedliche Arten von Signalen, die etwa von unterschiedlichen Ergänzungsmodulen ausgehen, über jeweils wenigstens einen speziellen Router 14 weitergeleitet werden. So können beispielsweise Beleuchtungssignale und/oder Sensorsignale stets von separaten Routern 14 weitergeleitet werden, um auch bei sehr unterschiedlich aufgebauten Transportrobotern 1 stets für eine zuverlässige Signalübertragung zu sorgen. Auch der oder die Router 14 müssen nicht zwingend fester Bestandteil des Basiselements 2 sein. Wenigstens ein Router 14 kann auch in einem Ergänzungsmodul aufgenommen sein. Es kann sich dabei um ein separates Routermodul handeln, bei dem wenigstens ein Router 14 in das Ergänzungsmodul integriert ist, wobei dieses Ergänzungsmodul dann noch eine Funktionseinrichtung aufweisen kann, die vorzugsweise funktional mit dem Router 14 in einer Beziehung steht. Der Router 14 kann beispielsweise die Signale von der Funktionseinrichtung und/oder an die Funktionseinrichtung weiterleiten.

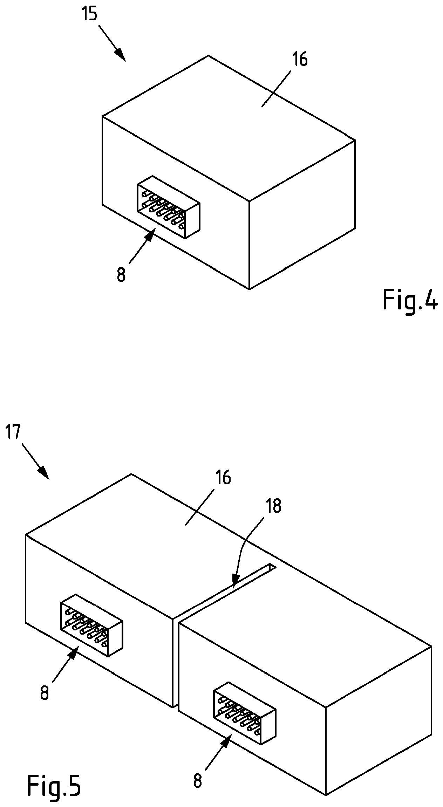

In der Fig. 4 ist beispielhaft ein Ergänzungsmodul 15 zum Verbinden mit einem Basiselement 2 dargestellt. Das dargestellte und insoweit bevorzugte Ergänzungsmodul 15 umfasst ein Gehäuse 16, in dem eine Funktionseinrichtung des Transportroboters 1 aufgenommen ist. Die elektrische Verbindung zwischen der Funktionseinrichtung und dem Basiselement 2 erfolgt über ein Verbindungselement 8, das mit den Verbindungselementen 8 der Basiselemente 2 kompatibel ist. Die Ergänzungsmodule 15 können dabei grundsätzlich in beliebiger Reihenfolge und an beliebigen Stellen der Basiselemente 2 mit diesen verbunden werden. Dazu werden die Ergänzungsmodule 15 seitlich über die zugehörigen Öffnungen 6 in die Aufnahmen 5 der Basiselemente 2 eingeschoben, wobei dann die an den korrespondierenden Seiten vorgesehenen korrespondierend ausgebildeten Verbindungselemente 8 zu einer elektrischen Verbindung zusammenfinden. Auf diese Weise kann eine Art Plug-and-Play Verbindung geschaffen werden, so dass es keiner separaten Einrichtung der Ergänzungsmodule 15 durch den Monteur mehr bedarf.

Die Größe der Ergänzungsmodule 15 ist dabei so gewählt, dass wenigstens viele unterschiedliche Funktionseinrichtungen jeweils in einem Ergänzungsmodul 15 aufgenommen werden können. In Ausnahmefällen kann es jedoch gewünscht sein, ein zwei benachbarte Aufnahmen 5 eines Basiselements 2 ausfüllendes Ergänzungsmodul 17 zu verwenden, wie es beispielhaft in der Fig. 5 dargestellt ist. Das dargestellte Ergänzungsmodul 17 umfasst zwei gleichartige Verbindungselemente 8 zum Bereitstellen zweier Verbindungen, insbesondere Steckverbindungen, mit dem Basiselement 2. Erforderlich ist dies jedoch nicht. Zudem weist das Ergänzungsmodul 17 eine Aussparung 18 auf, in der das Ergänzungsmodul 17 wenigstens teilweise eine zwischen zwei Aufnahmen 5 eines Basiselements 2 vorgesehene Trennwand 19 aufnehmen kann, um das Einschieben des Ergänzungsmoduls 17 in das Basiselement 2 zu gewährleisten.

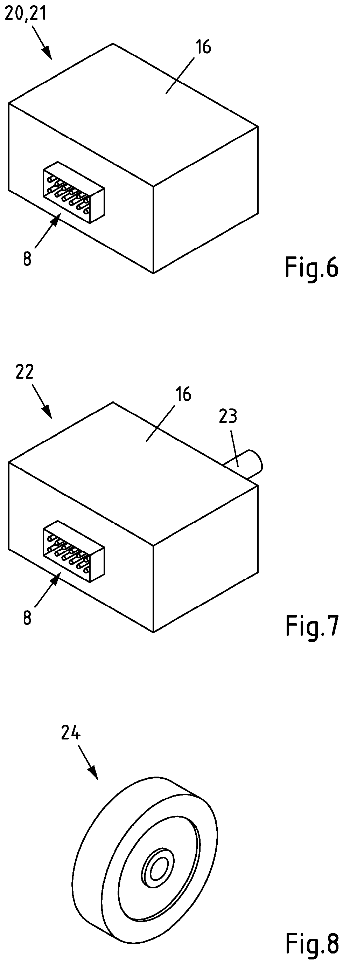

In der Fig. 6 ist ein Ergänzungsmodul in Form eines Kommunikationsmoduls 20 und/oder eines Steuermoduls 21 dargestellt. Das Kommunikationsmodul 20 oder Steuermodul 21 bedarf lediglich einer elektronischen Funktionseinrichtung, die gänzlich im Ergänzungsmodul verbaut sein kann. Dennoch kann das Kommunikationsmodul 20 oder das Steuermodul 21 mit unterschiedlicher Software versehen werden, um das Kommunikationsmodul 20 oder das Steuermodul 21 sehr einfach an die jeweiligen Anforderungen anpassen zu können. Alternativ können aber auch im Transportrobotersystem unterschiedliche Arten von Kommunikationsmodulen 20 und Steuermodulen 21 vorgehalten werden, die auch hartwareseitig an spezielle Anwendungen angepasst sind und mithin je nach Anwendung ausgewählt werden. Die Steuerungsmodule 21 können dabei hinsichtlich ihrer Steuerungseinrichtungen an bestimme Einsätze angepasst werden. Im Falle eines Kommunikationsmoduls 20 können auch ein Sender und eine Empfangseinrichtung in dem Kommunikationsmodul verbaut sein, die eine Kommunikation durch das Gehäuse 16 des Kommunikationsmoduls 20 erlauben. Die Kommunikation kann zwischen einem Transportroboter 1 und einer zentralen Kontrolleinheit und/oder zwischen mehreren Transportrobotern 1 erfolgen, und zwar insbesondere zwischen den Transportrobotern 1 eines Schwarms von Transportrobotern 1, so dass diese sich über das weitere Vorgehen gegenseitig abstimmen können. Grundsätzlich kann die Kommunikation beispielsweise über ein lokales Funknetz oder ein Mobilfunknetz, beispielsweise Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE) erfolgen. Andere Wege der Kommunikation sind bekannt und können grundsätzlich auch genutzt werden.

In der Fig. 7 ist ein Ergänzungsmodul in Form eines Antriebsmoduls 22 dargestellt. Die Antriebseinheit des Antriebsmoduls 22 wird dabei insbesondere von einem Elektromotor gebildet. Zudem weist das Antriebsmodul 22 eine Abtriebswelle 23 auf, die Antriebsenergie nach außen übertragen kann. Die Abtriebswelle 23 kann beispielsweise zur Montage eines Rads 24 genutzt werden, wenn der Transportroboter 1 selbständig fahren können soll. Ja nach der Art des Antriebs und den jeweiligen Anforderungen an den Antrieb können im Transportrobotersystem unterschiedliche Arten von Antriebsmodulen 22 bereitgehalten werden. Die Antriebsmodule 22 können sich dabei beispielsweise hinsichtlich der Leistung des Antriebs und/oder des diesem zugeordneten Getriebes unterscheiden. Wenn der Transportroboter nur kurze Wege in flachem Gelände zurücklegen muss, können leistungsärmere Antriebe ausreichen als für längere Strecken in hügeligem Gelände. Dabei können auch die Räder 24 an unterschiedliche Anforderungen angepasst sein. Ein beispielhaftes Rad 24 ist in der Fig. 8 dargestellt, dessen Reifen weich ist und ohne Profil auskommt. Es könne aber auch festere und/oder profiliertere Räder 24 im Transportrobotersystem bereitgehalten werden. Das Montieren kann einfach durch Aufstecken der Räder 24 auf die Abtriebswelle 23 des Antriebsmoduls 22 erfolgen, was auch ein einfaches Austauschen der Räder 24 begünstigt. In vielen Fällen wird es zudem bevorzugt sein, wenn jedes Rad 24 über ein eigenes Antriebsmodul 22 angetrieben wird. Dies ist aber nicht erforderlich und aus Kostengründen bedarfsweise auch nicht erwünscht. Dann kann anstelle eines Antriebsmoduls 22 auch ein Achsmodul als Ergänzungsmodul vorgesehen werden, das eine Achse zum Aufstecken eines Rads 24 anstelle der Abtriebswelle 23 des Antriebsmoduls 22 bereitstellt. Mithin ist bei einem Achsmodul auch keine Antriebseinheit vorgesehen oder erforderlich. Unter Umständen kann es aber dennoch wünschenswert sein, unterschiedliche Arten von Achsmodulen im Transportrobotersystem bereitzustellen.

Richtungsänderungen des Transportroboters 1 können beispielsweise durch unterschiedliche Drehzahlen und/oder Drehrichtungen der Räder 24 bewirkt werden. Es kann aber auch wenigstens ein Antriebsmodul 22 als steuerbares Antriebsmodul 22 ausgebildet sein. Bei diesem kann beispielsweise die Achse oder die Abtriebswelle 23 geschwenkt werden, um die Richtung, in die der Transportroboter 1 fährt, zu beeinflussen. Somit wird beispielsweise ein autonomes Fahren des Transportroboters 1 möglich. Alternativ oder zusätzlich lassen sich in die Antriebsmodule auch Energierückgewinnungseinrichtungen zur Rückgewinnung von kinetischer Energie integrieren. Dies ist besonders unter Verwendung eines Elektromotors zweckmäßig der im Falle eines Bremsens des Transportroboters 1 Energie in Form von Strom erzeugen und an ein Batteriemodul leiten kann.

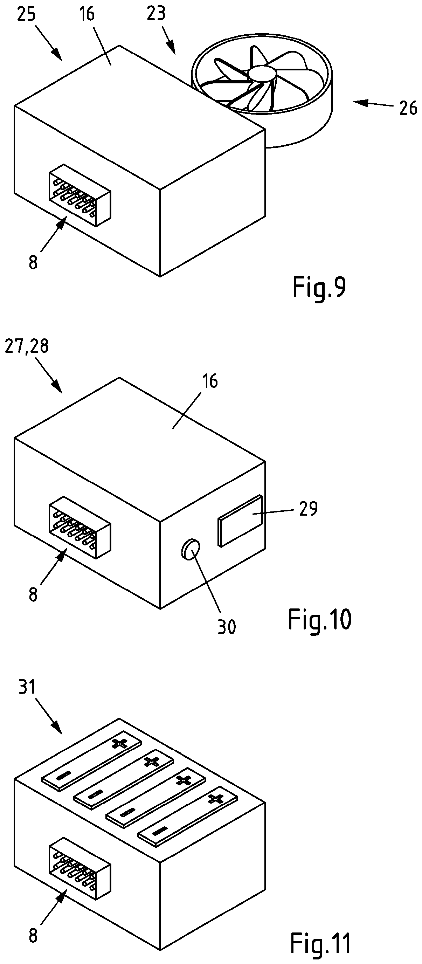

In der Fig. 9 ist eine weitere Art eines Antriebsmoduls 25 dargestellt, das nicht dem Fahren, sondern dem Fliegen des Transportroboters 1 dient. Zu diesem Zweck weist das Antriebsmodul 25 eine Antriebseinheit und bedarfsweise ein Getriebe auf, um eine Abtriebswelle 23 anzutreiben, an der ein Rotor 26 montiert ist. Durch die Drehung des Rotors 26 wird in bekannter Weise Auftrieb erzeugt. Auch hier wird wie beim Fahren ein einzelnes solches Antriebsmodul 25 zum Abheben des Transportroboters 1 eher nicht ausreichen, so dass bei dem dargestellten und insoweit bevorzugten Transportroboter 1 die entsprechenden Antriebsmodule 22,25 jeweils den vier über den Umfang des Transportroboters 1 verteilten Rändern zugeordnet sind. Des Weiteren können wie beim dargestellten Transportroboter 1 unterschiedliche Antriebsmodule 25 kombiniert werden. Der dargestellte und insoweit bevorzugte Transportroboter 1 kann mithin sowohl fliegen als auch fahren.

In der Fig. 10 ist ein Ergänzungsmodul in Form eines Beleuchtungsmoduls 27 und/oder eines Sensormoduls 28 dargestellt. Wenn dies zweckmäßig erscheint, können auch zwei unterschiedliche Funktionseinrichtungen wie Sensoren 29 und Leuchtmittel 30 in einem einzigen Ergänzungsmodul zusammengefasst werden. Um eine höhere Flexibilität bereitstellen zu können, ist jedoch eine Trennung einzelner Ergänzungsmodule zweckmäßig. Zudem können so einfacher unterschiedliche Arten von Sensoren 29 bzw. Sensormodulen 28 mit unterschiedlichen Arten von Beleuchtungen 27 bzw. Leuchtmitteln 30 kombiniert werden.

Das Sensormodul 28 kann beispielsweise dazu dienen, den Ort des Transportroboters 1 oder mögliche Hindernisse zu erfassen. Dazu kann einen Sensor 29 in Forme einer Empfangseinheit zum Empfang von Informationsdaten oder Satellitendaten, etwa GPS-Daten (Global Positioning System) vorgesehen sein. Es kann aber auch ein Sensor 29 in Form eines Abstandsmessers etwa unter Verwendung eines Laser, Ultraschalls oder optischer Signale verwendet werden. Es können auch Sensoren 29 in Form von optischen Einrichtungen zum Erkennen und Identifizieren bestimmter Gegenstände vorgesehen sein, etwa um erkennen zu können, wo Sendungen abgeliefert oder aufgenommen werden sollen.

Das Beleuchtungsmodul 27 kann Leuchtmittel 30 aufweisen, die eine Markierung des Transportroboters 1 erlauben, so dass dieser von Passanten oder anderen Fahrzeugen besser erkannt wird. Es können aber alternativ oder zusätzlich auch Leuchtmittel 30 zum Erzeugen von Leuchtsignalen vorgesehen sein. So kann ein Transportroboter 1 beispielsweise blinken, wenn er am öffentlichen Straßenverkehr teilnimmt. Dies ist insbesondere dann zweckmäßig, wenn der Transportroboter 1 wenigstens bei Dämmerung unterwegs ist. Um die Anforderungen an die Beleuchtung abbilden zu können, können unterschiedliche Arten von Beleuchtungsmodulen 27 bereitgehalten werden, die unterschiedliche Leuchtmittel 30 aufweisen. Die Leuchtmittel 30 können alternativ oder zusätzlich aber auch der Ausleuchtung der Umgebung des Transportroboter 1 dienen, insbesondere wenn sich der Transportroboters 1 wenigstens teilweise optisch orientiert. Auch hier kann je nach der erforderlichen Art und/oder Intensität der Beleuchtung zwischen unterschiedlichen Arten von

In der Fig. 11 ist ein Ergänzungsmodul in Form eines Batteriemoduls 31 dargestellt, das der Energieversorgung des Transportroboters 1 dient. Je nach Energiebedarf und der Dauer des autonomen Betriebs des Transportroboters 1 können bedarfsweise unterschiedliche Arten von Batteriemodulen 31 aus dem Transportrobotersystem ausgewählt werden. Alternativ oder zusätzlich kann auch die Anzahl der für einen Transportroboter 1 verwendeten Batteriemodule 31 entsprechend bestimmter Vorgaben gewählt werden. Dabei werden unter Batterien vorliegend nicht nur Batterien im klassischen Sinne verstanden, sondern auch Akkumulatoren, die nicht ausgetauscht, sondern nur wieder aufgeladen werden müssen.

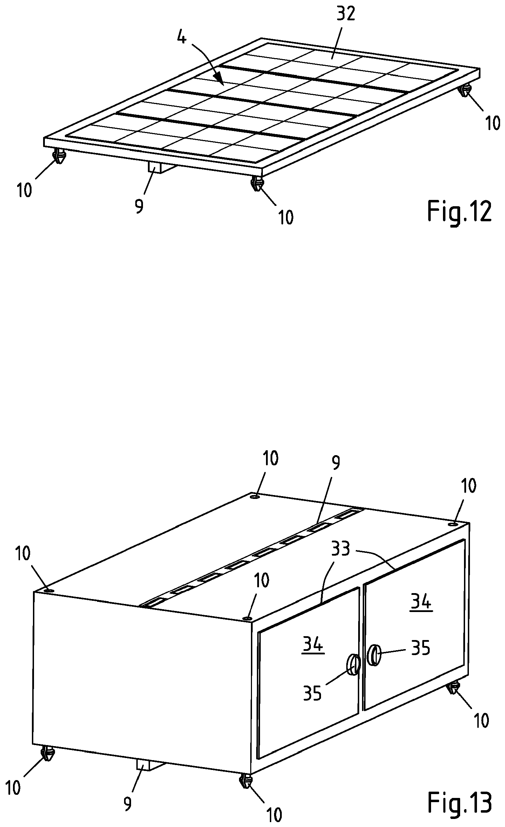

Die Batteriemodule 31 eines Transportroboters 1 können bei Bedarf auch während des Betriebs des Transportroboters 1 nachgeladen werden, wenn der Transportroboter 1 beispielsweise ein Solarmodul 32 und/oder ein Solarpaneel 4 aufweist, wie dies in der Fig. 12 dargestellt ist. Das Solarpaneel 4 kann mit einem Solarmodul 32, einer Steuereinrichtung 13 und/oder mit einem Batteriemodul 31 verbunden sein, so dass der Strom vom Solarpaneel 4 im Batteriemodul 31 und oder dem Solarmodul 32 gespeichert wird. Die Solarmodule 32 und Solarpaneele 4 des Transportrobotersystems können unterschiedlicher Art sein und insbesondere abhängig davon gewählt werden, wie stark die zu erwartende Sonneneinstrahlung und/oder wie groß der erwartete Energiebedarf ist. Bedarfsweise können auch mehrere Solarmodule 4 und/oder Solarpaneele 4 in einem Transportroboter 1 kombiniert werden.

Alternativ oder zusätzlich zum Solarmodul 32 könnte auch wenigstens eine elektromotorische Bremse vorgesehen sein, bei der die Bremsenergie, etwa über eine Wirbelstrombremse oder dergleichen, wiedergewonnen und in einer Batterie, insbesondere im Batteriemodul 31, gespeichert wird. Beim Abbremsen des Transportroboters 1 wird dann die Energie nicht vollständig dissipiert, sondern in großem Umfang als elektrische Energie wiedergewonnen.

In der Fig. 13 ist beispielhaft eine Sendungsbox 3 dargestellt. In dem Transportrobotersystem 1 können unterschiedliche Arten von Sendungsboxen 3 bereitgehalten werden, um diese danach auswählen zu können, welche Anzahl, Art und/oder Größe von Sendungen transportiert werden soll. Bei den Sendungskann kann es sich ganz grundsätzlich um Stückgüter aller Art handeln. Der dargestellte und insoweit bevorzugte Transportroboter 1 ist insbesondere für den Transport von Sendungen in Form von Paketsendungen vorgesehen. Zum Einlegen der Sendungen sind bei der Sendungsbox 3 zwei Öffnungen 33 vorgesehen, die jeweils mit einer Klappe 34 verschlossen werden können. Zudem ist noch jeder Klappe 34 ein Verriegelungsmittel 35 zugeordnet, um die Klappe 34 in der geschlossenen Stellung verriegeln zu können. Das Verriegelungsmittel 35 kann mechanisch von einem Bediener bedient werden oder elektronisch von dem Transportroboter 1 bedient werden, um ein Öffnen zu bewirken oder zu verhindern. Im letzteren Fall sind die Verriegelungsmittel 35 vorzugsweise an eine Steuereinrichtung 13 angeschlossen, um das Öffnen und Schließen der Klappe steuern bzw. nur unter bestimmen Bedingungen freizugeben.

### Bezugszeichenliste:

- 1: Transportroboter
- 2: Basiselement
- 3: Sendungsbox
- 4: Solarpaneel
- 5: Aufnahme
- 6: Öffnung
- 7: Rückwand
- 8: Verbindungselement
- 9: Basisverbindungselement
- 10: Verbindungsmittel
- 11: Rastverbindung
- 12: Kabelbaum
- 13: Steuereinrichtung
- 14: Router
- 15: Ergänzungsmodul
- 16: Gehäuse
- 17: Ergänzungsmodul
- 18: Aussparung
- 19: Trennwand
- 20: Kommunikationsmodul
- 21: Steuermodul
- 22: Antriebsmodul
- 23: Abtriebswelle
- 24: Rad
- 25: Antriebsmodul
- 26: Rotor
- 27: Beleuchtungsmodul
- 28: Sensormodul
- 29: Sensor
- 30: Leuchtmittel
- 31: Batteriemodul
- 32: Solarmodul
- 33: Öffnung
- 34: Klappe
- 35: Verriegelungsmittel

## Patentansprüche

1. Modularer Transportroboter (1) zum Transportieren von Sendungen, mit wenigstens einem Basiselement (2) zum körperlichen Aufbau des Transportroboters (1), mit wenigstens zwei Ergänzungsmodulen (15,17) zum technischen Ausstatten des Transportroboters (1), mit wenigstens einer Sendungsbox (3) zur Aufnahme von Sendungen und mit wenigstens einer Steuereinrichtung (13) zum Steuern des Transportroboters (1), wobei das wenigstens eine Basiselement (2) und jedes der Ergänzungsmodule (15,17) korrespondierende Verbindungselemente (8) aufweisen und jeweils über wenigstens eine elektrische Verbindung umfassend die korrespondierenden Verbindungselemente (8) elektrisch miteinander verbunden sind, wobei das wenigstens eine Basiselement (2) wenigstens einen Kabelbaum zum elektrischen Verbinden der Verbindungselemente (8) des Basiselements (2) untereinander aufweist, wobei das wenigstens eine Basiselement (2) und die Ergänzungsmodule (15,17) derart korrespondierend zueinander ausgebildet sind, dass die Verbindungselemente (8) der wenigstens zwei Ergänzungsmodule (15,17) jeweils wahlweise direkt mit wenigstens zwei an unterschiedlichen Stellen vorgesehene Verbindungselementen (8) unter Ausbildung jeweils einer gemeinsamen Verbindung mit dem wenigstens einen Basiselement (2) verbindbar sind, **dadurch gekennzeichnet, dass** das wenigstens eine Basiselement (2) eine Mehrzahl voneinander beabstandeter Aufnahmen (5) zum formschlüssigen Aufnehmen von Ergänzungsmodulen (15,17) aufweist, wobei die wenigstens zwei Ergänzungsmodule (15,17) in unterschiedlichen Aufnahmen (5) formschlüssig aufgenommen sind, wobei die Aufnahmen (5) eine Öffnung (6) zum Einführen der Ergänzungsmodule (15,17) aufweisen und wobei an den den Öffnungen (6) abgewandten Seiten der Aufnahmen (5) wenigstens ein Verbindungselement (8) vorgesehen ist.

2. Modularer Transportroboter nach Anspruch 1,
**dadurch gekennzeichnet, dass** die Verbindungselemente (8) wenigstens im Wesentlichen als Steckverbindungselemente und/oder die elektrische Verbindung wenigstens im Wesentlichen als elektrische Steckverbindung ausgebildet ist, und/oder wenigstens eine Kommunikationseinrichtung für eine Kommunikation zwischen dem Transportroboter (1) und einer externen Kontrollstation, wenigstens eine Antriebseinrichtung zum Bewegen des Transportroboters (1) zu einem Aufnahmeort und/oder Abgabeort der Sendungen und/oder wenigsten einen Signalrouter (14) zur Weiterleitung von Signalen, insbesondere von wenigstens einer bestimmten Art von Signalen, zwischen Ergänzungsmodulen (15,17) vorgesehen sind.

3. Modularer Transportroboter nach Anspruch 1 oder 2,
**dadurch gekennzeichnet, dass** wenigstens ein Ergänzungsmodul (17) gleichzeitig in zwei benachbarten Aufnahmen (5) des wenigstens einen Basiselements (2) aufgenommen ist und dass, vorzugsweise, das wenigstens eine Ergänzungsmodul (17) mit jeweils einem jeder Aufnahme (5) zugeordneten Verbindungselement (8) unter Bildung einer Verbindung verbunden ist und/oder eine die zwei benachbarten Aufnahmen (5) trennende Wand (19) wenigstens teilweise in einer Aussparung (18) des Ergänzungsmoduls (17) aufgenommen ist.

4. Modularer Transportroboter nach einem der Ansprüche 1 bis 3,
**dadurch gekennzeichnet, dass** das wenigstens eine Basiselement (2) neben der Verbindung zusätzlich mechanisch, vorzugsweise jeweils über wenigstens eine Rastverbindung (11), mit den wenigstens zwei Ergänzungsmodulen (15,17) verbunden ist und, vorzugsweise, die mechanischen Verbindungen an den den Öffnungen (6) abgewandten Seiten der Aufnahmen (5) vorgesehen sind und/oder dass die wenigstens eine Steuereinrichtung (13) in einem Ergänzungsmodul (15,17) in Form eines Steuermoduls (21), die wenigstens eine Kommunikationseinrichtung in einem Ergänzungsmodul in Form eines Kommunikationsmoduls (20) und/oder die wenigstens eine Antriebseinrichtung in einem Ergänzungsmodul in Form eines Antriebsmoduls (22) vorgesehen ist.

5. Modularer Transportroboter nach einem der Ansprüche 1 bis 4,
**dadurch gekennzeichnet, dass** wenigstens ein Ergänzungsmodul als Sendungsbox (3) zum Transport von Sendungen, als Antriebsmodul (22) zum Bewegen des Transportroboters (1) zu einem Aufnahmeort und/Abgabeort der Sendungen, als Achsmodul zur Montage eines Rades (24), als Kommunikationsmodul (20) für eine Kommunikation zwischen dem Transportroboter (1) und einer externen Kontrollstation oder einem anderen Transportroboter (1), als Steuermodul (21) zum Steuern des Transportroboters (1), als Batteriemodul (31) für die Spannungsversorgung des Transportroboters (1), als Beleuchtungsmodul (27) zur Beleuchtung des Transportroboters (1) und/oder der Umgebung des Transportroboters (1), als Sensormodul (28) zum Erfassen der Umgebung des Transportroboters (1) und/oder als Solarmodul(32) zum Versorgen der Transportroboter (1) mit über wenigstens ein Solarpaneel (4) gewonnenem Strom ausgebildet ist.

6. Modularer Transportroboter nach einem der Ansprüche 1 bis 5,
**dadurch gekennzeichnet, dass** der wenigstens eine Kabelbaum (12), vorzugsweise bestimmte, Leitungen zur Spannungsversorgung von wenigstens einem Ergänzungsmodul (15,17), Leitungen zur Übertragung von Steuerbefehlen und/oder Informationen zwischen Ergänzungsmodulen (15,17) und/oder zwischen wenigstens einem Ergänzungsmodul (15,17) und der wenigstens einen Steuereinrichtung (13) und/oder Kommunikationseinrichtung aufweist.

7. Modularer Transportroboter nach einem der Ansprüche 1 bis 6,
**dadurch gekennzeichnet, dass** wenigstens zwei, insbesondere gleichartige, Basiselemente (2), vorzugsweise an einer Oberseite und/oder einer Unterseite, mit korrespondierenden Basisverbindungselementen (9), insbesondere Basissteckverbindungselementen, vorgesehen sind und dass, vorzugsweise, die wenigstens zwei Basiselemente (2), vorzugsweise übereinander, über eine durch die korrespondierenden Basisverbindungselemente (9) gebildete Basisverbindung, insbesondere Basissteckverbindung, und/oder die wenigstens zwei Basiselemente (2) neben der Basisverbindung, insbesondere Basissteckverbindung, zusätzlich mechanisch, vorzugsweise über Rastverbindungen (11), miteinander verbunden sind und dass, weiter vorzugsweise, die mechanischen Verbindungen an den einander zugewandten Rändern der Basiselemente (2) vorgesehen sind.

8. Modularer Transportroboter nach einem der Ansprüche 1 bis 7,
**dadurch gekennzeichnet, dass** die wenigstens eine Sendungsbox (3), vorzugsweise an einer Oberseite und/oder einer Unterseite, wenigstens ein Basisverbindungselement (9), insbesondere Basissteckverbindungselement, zum Verbinden mit einem Basiselement (2) und/oder mit einer weiteren Sendungsbox (3) aufweist und dass, vorzugsweise, die wenigstens eine Sendungsbox (3) an einer Oberseite und/oder einer Unterseite zueinander und/oder zu den Basisverbindungselementen (9) wenigstens eines Basiselements (2) korrespondierende Basisverbindungselemente (9) aufweist.

9. Modularer Transportroboter nach einem der Ansprüche 1 bis 8,
**dadurch gekennzeichnet, dass** wenigstens ein Solarpaneel (4), vorzugsweise an einer Unterseite, wenigstens ein Basisverbindungselement (9), insbesondere Basissteckverbindungselement, zum Verbinden mit einem Basiselement (2) und/oder mit einer weiteren Sendungsbox (3) aufweist und, vorzugsweise, das Basisverbindungselement (9) des wenigstens einen Solarpaneels (4) mit wenigstens einem Basisverbindungselement (9) wenigstens eines Basiselements (2) und/oder einer Sendungsbox (3) korrespondierend ausgebildet ist und/oder dass das wenigstens eine Basiselement (2), die wenigstens eine Sendungsbox (3) und/oder das wenigstens eine Solarpaneel (4) in mehreren Ebenen übereinander angeordnet sind und, vorzugsweise, das wenigstens eine Basiselement (2), die wenigstens eine Sendungsbox (3) und das wenigstens eine Solarpaneel (4) untereinander direkt, insbesondere über eine Rastversbindung (11), verbunden sind.

10. Modularer Transportroboter nach einem der Ansprüche 1 bis 9,
**dadurch gekennzeichnet, dass** wenigstens eine elektromotorische Bremse, insbesondere umfassend eine Wirbelstrombremse, zum Umwandeln von Bremsenergie in elektrische Energie vorgesehen ist und, vorzugsweise, die elektromotorische Bremse zum Speichern der wiedergewonnenen elektrischen Energie mit einer Batterie und/oder einem Batteriemodul verbunden ist und/oder dass die wenigstens eine Sendungsbox (3) wenigstens eine, vorzugsweise durch eine Klappe (34) und/oder Tür verschließbare, Öffnung (6) zum Einlegen und Herausnehmen wenigstens einer Sendung aufweist und, vorzugsweise, ein Verriegelungsmittel (35), insbesondere Schloss zum Verriegeln der Klappe (14) und/oder Tür in einer die Öffnung verschließenden Stellung vorgesehen ist.

11. Transportrobotersystem zum modularen Zusammenstellen von modularen Transportrobotern (1) nach einem der Ansprüche 1 bis 10 zum Transportieren von Sendungen, mit Basiselementen (2) zum körperlichen Aufbau der Transportroboter (1), unterschiedlichen Ergänzungsmodulen (15,17) zum technischen Ausstatten des Transportroboters (1), und mit Steuereinrichtungen (13) zum Steuern der Transportroboter (1), wobei die Basiselemente (2) und die Ergänzungsmodule (15,17) korrespondierende Verbindungselemente (8) zum elektrischen Verbinden der Basiselemente (2) jeweils mit einer Mehrzahl von Ergänzungsmodulen (15,17) aufweisen, wobei die Basiselemente (2) jeweils wenigstens einen Kabelbaum (12) zum elektrischen Verbinden der Verbindungselemente (8) des Basiselements (2) untereinander aufweisen und wobei die Basiselemente (2) und die Ergänzungsmodule (15,17) derart korrespondierend zueinander ausgebildet sind, dass wahlweise an einer Stelle der Basiselemente (2) gleichartige und/oder unterschiedliche Ergänzungsmodule (15,17) über Basisverbindungen, insbesondere Basissteckverbindungen, elektrisch mit den Basiselementen (2) und/oder dass wahlweise gleichartige und/oder unterschiedliche Ergänzungsmodule (15,17) an unterschiedlichen Stellen der Basiselemente (2) über Verbindungen elektrisch mit den Basiselement (2) verbindbar sind, wobei die Basiselemente (2) jeweils eine Mehrzahl voneinander beabstandeten Aufnahmen (5) zum formschlüssigen Aufnehmen von gleichartigen und/oder unterschiedlichen Ergänzungsmodulen (15,17) aufweist, wobei wenigstens zwei gleichartige und/oder unterschiedliche Ergänzungsmodule (15,17) in unterschiedlichen Aufnahmen (5) formschlüssig aufnehmbar sind und wobei die Aufnahmen der Basiselemente (2) jeweils eine Öffnung zum Einführen der Ergänzungsmodule und an den den Öffnungen abgewandten Seiten der Aufnahmen wenigstens ein Verbindungselement aufweisen.

12. Transportrobotersystem nach Anspruch 11,
**dadurch gekennzeichnet, dass** Kommunikationseinrichtungen für eine Kommunikation zwischen Transportrobotern (1) und externen Kontrollstationen, Antriebseinrichtungen zum Bewegen der Transportroboter (1) zu einem Aufnahmeort und/Abgabeort der Sendungen und/oder Signalrouter (14) zur Weiterleitung von Signalen, insbesondere von wenigstens einer bestimmten Art von Signalen, zwischen Ergänzungsmodulen (15,17) vorgesehen sind.

13. Transportrobotersystem nach einem der Ansprüche 11 oder 12,
**dadurch gekennzeichnet, dass** gleichzeitig in zwei benachbarten Aufnahmen der Basiselemente (2) aufnehmbare Ergänzungsmodule (17) vorgesehen sind und dass, vorzugsweise, die Ergänzungsmodule (17) gleichzeitig mit Verbindungselementen (8) den beiden benachbarten Aufnahmen (5) unter Bildung einer Verbindung verbindbar sind und/oder eine die zwei benachbarten Aufnahmen (5) trennende Wand (19) wenigstens teilweise in einer Aussparung (18) der Ergänzungsmodule (17) aufnehmbar ist und/oder die Basiselemente (2) zusätzlich zu einer elektrischen Verbindung mechanisch, vorzugsweise über Rastverbindungen (11), mit Ergänzungsmodulen (15,17) verbindbar sind und dass, weiter vorzugsweise, die mechanischen Verbindungen an den den Öffnungen (6) abgewandten Seiten der Aufnahmen (5) vorgesehen sind.

14. Transportrobotersystem nach einem der Ansprüche 11 bis 13,
**dadurch gekennzeichnet, dass** die Steuereinrichtungen (13) in Ergänzungsmodulen in Form von Steuermodulen (21), die Kommunikationseinrichtungen in Ergänzungsmodulen in Form von Kommunikationsmodulen (20) und/oder die Antriebseinrichtungen in Ergänzungsmodulen in Form von Antriebsmodulen (22) vorgesehen sind und/oder dass Ergänzungsmodule als gleichartige und/oder unterschiedliche Sendungsboxen (3) zum Transport von Sendungen, als gleichartige und/oder unterschiedliche Antriebsmodule (22) zum Bewegen des Transportroboters (1) zu einem Aufnahmeort und/Abgabeort der Sendungen, als gleichartige und/oder unterschiedliche Achsmodule zur Montage eines Rades (14), als gleichartige und/oder unterschiedliche Kommunikationsmodule (20) für eine Kommunikation zwischen dem Transportroboter (1) und einer externen Kontrollstation oder einem weiteren Transportroboter (1), als gleichartige und/oder unterschiedliche Steuermodule (21) zum Steuern des Transportroboters (1), als Batteriemodule (31) für die Spannungsversorgung des Transportroboters (1), als gleichartige und/oder unterschiedliche Beleuchtungsmodule (27) zur Beleuchtung des Transportroboters (1) und/oder der Umgebung der Transportroboter (1), als gleichartige und/oder unterschiedliche Sensormodule (28) zum Erfassen der Umgebung der Transportroboter (1) und/oder als gleichartige und/oder unterschiedliche Solarmodule (32) zum Versorgen der Transportroboter (1) mit über wenigstens ein Solarpaneel (4) gewonnenem Strom ausgebildet ist.

15. Transportrobotersystem nach einem der Ansprüche 11 bis 14,
**dadurch gekennzeichnet, dass** die Kabelbäume (12) der gleichartigen und/oder unterschiedlichen Basiselemente (2), vorzugsweise bestimmte, Leitungen zur Spannungsversorgung von wenigstens einem Ergänzungsmodul (15,17), Leitungen zur Übertragung von Steuerbefehlen und/oder Information zwischen Ergänzungsmodulen (15,17) und/oder zwischen wenigstens einem Ergänzungsmodul (15,17) und der wenigstens einen Steuereinrichtung (13) und/oder Kommunikationseinrichtung aufweist.

16. Transportrobotersystem nach einem der Ansprüche 11 bis 15,
**dadurch gekennzeichnet, dass** die gleichartigen und/oder unterschiedlichen Basiselemente (2), vorzugsweise an einer Oberseite und/oder einer Unterseite, jeweils mit korrespondierenden Basisverbindungselementen (9), insbesondere Basissteckverbindungselementen, versehen sind und, vorzugsweise, die Basiselemente (2), vorzugsweise übereinander, über eine durch die korrespondierenden Basisverbindungselemente (9) gebildete Basisverbindung miteinander verbindbar sind und/oder dass die gleichartigen und/oder unterschiedlichen Basiselemente (2) zusätzlich zu den Basisverbindungen, insbesondere Basissteckverbindungen, mechanisch, vorzugsweise über Rastverbindungen, (11) miteinander verbindbar sind und, vorzugsweise, die Rastverbindungen (11) an den einander zugewandten Rändern der Basiselemente (2) vorgesehen sind.

17. Transportrobotersystem nach einem der Ansprüche 11 bis 16,
**dadurch gekennzeichnet, dass** gleichartige und/oder unterschiedliche Sendungsboxen (3) vorgesehen sind und dass, vorzugsweise, die Sendungsboxen (3) an einer Oberseite und/oder einer Unterseite, wenigstens ein Basisverbindungselement (9), insbesondere Basissteckverbindungselement, zum Verbinden mit einem Basiselement (2) und/oder mit einer weiteren Sendungsbox (3) aufweisen und dass, weiter vorzugsweise, die wenigstens eine Sendungsbox (3) an einer Oberseite und/oder einer Unterseite zueinander und/oder zu den Basisverbindungselementen (9) der Basiselemente (2) korrespondierende Basisverbindungselemente (9) aufweisen.

18. Transportrobotersystem nach einem der Ansprüche 11 bis 17,
**dadurch gekennzeichnet, dass** gleichartige und/oder unterschiedliche Solarmodule (32) und/oder Solarpaneele (4) vorgesehen sind und, vorzugsweise, an den Unterseiten der Solarmodule (32) ein Basisverbindungselement (9), insbesondere Basissteckverbindungselement, zum Verbinden mit einem Basiselement (2) und/oder mit einer weiteren Sendungsboxbox (3) vorgesehen sind und/oder dass die Basiselemente, die Sendungsboxen (3), Solarmodule (32) und/oder die Solarpaneele (4) in mehreren Ebenen übereinander anordenbar sind und, vorzugsweise, die Basiselemente (2), die Sendungsboxen (3), Solarmodule (32) und/oder die Solarpaneele (4) untereinander direkt, insbesondere über eine Rastversbindung (11), verbindbar sind und/oder dass die wenigstens eine Sendungsbox (3) wenigstens eine, vorzugsweise durch eine Klappe (34) und/oder Tür verschließbare, Öffnung (33) zum Einlegen und Herausnehmen wenigstens einer Sendung aufweist und, vorzugsweise, eine Verriegelungsmittel (35), insbesondere Schloss zum Verriegeln der Klappe (34) und/oder Tür in einer die Öffnung (33) verschließenden Stellung vorgesehen ist.

## Claims

1. Modular transport robot (1) for transporting consignments, with at least one base element (2) for the physical structure of the transport robot (1), with at least two supplementary modules (15, 17) for technically equipping the transport robot (1), with at least one consignment box (3) for receiving consignments and with at least one control apparatus (13) for controlling the transport robot (1), wherein the at least one base element (2) and each of the supplementary modules (15, 17) have corresponding connection elements (8) and are electrically connected to one another in each case via at least one electrical connection comprising the corresponding connection elements (8), wherein the at least one base element (2) has at least one cable harness for electrically connecting the connection elements (8) of the base element (2) to one another, wherein the at least one base element (2) and the supplementary modules (15, 17) are designed to correspond to one another in such manner that the connection elements (8) of the at least two supplementary modules (15, 17) can each optionally be connected directly to at least two connection elements (8) provided at different points, each forming a common connection with the at least one base element (2), **characterised in that** the at least one base element (2) has a plurality of receptacles (5) spaced apart from one another for receiving supplementary modules (15, 17) in a positive-locking manner, wherein the at least two supplementary modules (15, 17) are received in different receptacles (5) in a positive-locking manner, wherein the receptacles (5) have an opening (6) for inserting the supplementary modules (15, 17) and wherein at least one connection element (8) is provided on the sides of the receptacles (5) facing away from the openings (6).

2. Modular transport robot according to claim 1, **characterised in that** the connection elements (8) are designed at least substantially as plug connection elements and/or the electrical connection is designed at least substantially as an electrical plug connection, and/or at least one communication apparatus for communication between the transport robot (1) and an external control station, at least one drive apparatus for moving the transport robot (1) to a receiving location and/or delivery location of the consignments and/or at least one signal router (14) for relaying signals, in particular of at least one determined type of signals, between supplementary modules (15, 17) is provided.

3. Modular transport robot according to claim 1 or 2, **characterised in that** at least one supplementary module (17) is simultaneously received in two adjacent receptacles (5) of the at least one base element (2) and **in that**, preferably, the at least one supplementary module (17) is respectively connected to a connection element (8) assigned to each receptacle (5) forming a connection and/or a wall (19) separating the two adjacent receptacles (5) is at least partially received in a recess (18) of the supplementary module (17).

4. Modular transport robot according to any one of claims 1 to 3, **characterised in that**, in addition to the connection, the at least one base element (2) is also connected mechanically, preferably in each case via at least one latch connection (11), to the at least two supplementary modules (15, 17) and, preferably, the mechanical connections are provided on the sides of the receptacles(5) facing away from the openings (6) and/or **in that** the at least one control apparatus (13) is provided in a supplementary module (15, 17) in the form of a control module (21), the at least one communication apparatus is provided in a supplementary module in the form of a communication module (20) and/or the at least one drive apparatus is provided in a supplementary module in the form of a drive module (22).

5. Modular transport robot according to any one of claims 1 to 4, **characterised in that** at least one supplementary module is designed as a consignment box (3) for transporting consignments, as a drive module (22) for moving the transport robot (1) to a receiving location and/or delivery location of the consignments, as an axle module for mounting a wheel (24), as a communication module (20) for communication between the transport robot (1) and an external control station or another transport robot (1), as a control module (21) for controlling the transport robot (1), as a battery module (31) for the voltage supply of the transport robot (1), as a lighting module (27) for lighting the transport robot (1) and/or the environment of the transport robot (1), as a sensor module (28) for detecting the environment of the transport robot (1) and/or as a solar module (32) for supplying the transport robot (1) with power obtained via at least one solar panel (4).

6. Modular transport robot according to any one of claims 1 to 5, **characterised in that** the at least one cable harness (12) has, preferably determined, lines for the voltage supply of at least one supplementary module (15, 17), lines for transmitting control commands and/or information between supplementary modules (15, 17) and/or between at least one supplementary module (15, 17) and the at least one control apparatus (13) and/or communication apparatus.

7. Modular transport robot according to any one of claims 1 to 6, **characterised in that** at least two, in particular identical, base elements (2) are provided, preferably on an upper side and/or an underside, with corresponding base connection elements (9), in particular base plug connection elements, and **in that**, preferably, the at least two base elements (2), preferably one above the other, are connected to one another via a base connection, in particular base plug connection, formed by the corresponding base connection elements (9), and/or the at least two base elements (2), in addition to the base connection, in particular base plug connection, are also mechanically connected to one another, preferably via latch connections (11), and **in that**, further preferably, the mechanical connections are provided on the edges of the base elements (2) facing one another.

8. Modular transport robot according to any one of claims 1 to 7, **characterised in that** the at least one consignment box (3), preferably on an upper side and/or an underside, has at least one base connection element (9), in particular base plug connection element, for connecting to a base element (2) and/or to a further consignment box (3) and **in that**, preferably, the at least one consignment box (3), on an upper side and/or an underside, has base connection elements (9) corresponding to one another and/or to the base connection elements (9) of at least one base element (2).

9. Modular transport robot according to any one of claims 1 to 8, **characterised in that** at least one solar panel (4), preferably on an underside, has at least one base connection element (9), in particular base plug connection element, for connecting to a base element (2) and/or to a further consignment box (3) and, preferably, the base connection element (9) of the at least one solar panel (4) is designed to correspond with at least one base connection element (9) of at least one base element (2) and/or one consignment box (3) and/or **in that** the at least one base element (2), the at least one consignment box (3) and/or the at least one solar panel (4) are arranged one above the other in a plurality of planes and, preferably the at least one base element (2), the at least one consignment box (3) and the at least one solar panel (4) are connected to one another directly, in particular via a latch connection (11).

10. Modular transport robot according to any one of claims 1 to 9, **characterised in that** at least one electromotive brake, in particular comprising an eddy current brake, is provided for converting braking energy into electrical energy and, preferably, the electromotive brake is connected to a battery and/or a battery module for storing the recovered electrical energy and/or **in that** the at least one consignment box (3) has at least one opening (6), which preferably can be locked by a hatch (34) and/or door, for inserting and removing at least one consignment and, preferably, a locking means (35), in particular lock, is provided for locking the hatch (14) and/or door in a position which locks the opening.

11. Transport robot system for the modular assembly of modular transport robots (1) according to any one of claims 1 to 10 for transporting consignments, with base elements (2) for the physical structure of the transport robots (1), different supplementary modules (15, 17) for technically equipping the transport robot (1), and with control apparatuses (13) for controlling the transport robots (1), wherein the base elements (2) and the supplementary modules (15, 17) have corresponding connection elements (8) for electrically connecting the base elements (2) in each case with a plurality of supplementary modules (15, 17), wherein the base elements (2) each have at least one cable harness (12) for electrically connecting the connection elements (8) of the base element (2) to one another and wherein the base elements (2) and the supplementary modules (15, 17) are designed to correspond to one another in such manner that optionally at one point of the base elements (2) identical and/or different supplementary modules (15, 17) can be electrically connected to the base elements (2) via base connections, in particular base plug connections, and/or in that optionally at different points of the base elements (2) identical and/or different supplementary modules (15, 17) can be electrically connected to the base elements (2) via connections, wherein the base elements (2) each have a plurality of receptacles (5) spaced apart from one another for receiving identical and/or different supplementary modules (15, 17) in a positive-locking manner, wherein at least two identical and/or different supplementary modules (15, 17) can be received in different receptacles (5) in a positive-locking manner and wherein the receptacles of the base elements (2) each have an opening for inserting the supplementary modules and at least one connection element at the sides of the receptacles facing away from the openings.

12. Transport robot system according to claim 11, **characterised in that** communication apparatuses for communication between transport robots (1) and external control stations, drive apparatuses for moving the transport robots (1) to a receiving location and/or delivery location of the consignments and/or signal routers (14) for relaying signals, in particular of at least one determined type of signals, between supplementary modules (15, 17) are provided.

13. Transport robot system according to any one of claims 11 or 12, **characterised in that** supplementary modules (17) that can be simultaneously received in two adjacent receptacles of the base elements (2) are provided and **in that**, preferably, the supplementary modules (17) can be connected simultaneously with connection elements (8) of the two adjacent receptacles (5) forming a connection and/or a wall (19) separating the two adjacent receptacles (5) can be received at least partially in a recess (18) of the supplementary modules (17) and/or, in addition to an electrical connection, the base elements (2) can be mechanically connected to supplementary modules (15, 17), preferably via latch connections (11), and **in that**, further preferably, the mechanical connections are provided on the sides of the receptacles (5) facing away from the openings (6).

14. Transport robot system according to any one of claims 11 to 13, **characterised in that** the control apparatuses (13) are provided in supplementary modules in the form of control modules (21), the communication apparatuses are provided in supplementary modules in the form of communication modules (20) and/or the drive apparatuses are provided in supplementary modules in the form of drive modules (22) and/or **in that** supplementary modules are provided as identical and/or different consignment boxes (3) for transporting consignments, as identical and/or different drive modules (22) for moving the transport robot (1) to a receiving location and/or delivery location of the consignments, as identical and/or different axle modules for mounting a wheel (14), as identical and/or different communication modules (20) for communication between the transport robot (1) and an external control station or a further transport robot (1), as identical and/or different control modules (21) for controlling the transport robot (1), as battery modules (31) for the voltage supply of the transport robot (1), as identical and/or different lighting modules (27) for lighting the transport robot (1) and/or the environment of the transport robots (1), as identical and/or different sensor modules (28) for detecting the environment of the transport robots (1) and/or as identical and/or different solar modules (32) for supplying the transport robots (1) with power obtained via at least one solar panel (4).

15. Transport robot system according to any one of claims 11 to 14, **characterised in that** the cable harnesses (12) of the identical and/or different base elements (2) have, preferably determined, lines for the voltage supply of at least one supplementary module (15, 17), lines for transmitting control commands and/or information between supplementary modules (15, 17) and/or between at least one supplementary module (15, 17) and the at least one control apparatus (13) and/or communication apparatus.

16. Transport robot system according to any one of claims 11 to 15, **characterised in that** the identical and/or different base elements (2), preferably on an upper side and/or an underside, are each provided with corresponding base connection elements (9), in particular base plug connection elements, and, preferably, the base elements (2) can be connected to one another, preferably one above the other, via a base connection formed by the corresponding base connection elements (9) and/or **in that**, in addition to the base connections, in particular base plug connections, the identical and/or different base elements (2) can be mechanically connected to one another, preferably via latch connections (11) and, preferably, the latch connections (11) are provided on the edges of the base elements (2) facing one another.

17. Transport robot system according to any one of claims 11 to 16, **characterised in that** identical and/or different consignment boxes (3) are provided and **in that**, preferably, the consignment boxes (3) have, on an upper side and/or an underside, at least one base connection element (9), in particular base plug connection element, for connecting to a base element (2) and/or to a further consignment box (3) and **in that**, further preferably, the at least one consignment box (3) has, on an upper side and/or an underside, base connection elements (9) corresponding to one another and/or to the base connection elements (9) of the base elements (2).

18. Transport robot system according to any one of claims 11 to 17, **characterised in that** identical and/or different solar modules (32) and/or solar panels (4) are provided and, preferably, a base connection element (9), in particular base plug connection element, is provided on the undersides of the solar modules (32) for connecting to a base element (2) and/or to a further consignment box (3) and/or in that the base elements, the consignment boxes (3), solar modules (32) and/or the solar panels (4) can be arranged one above the other in a plurality of planes and, preferably, the base elements (2), the consignment boxes (3), solar modules (32) and/or the solar panels (4) can be directly connected to one another, in particular via a latch connection (11), and/or **in that** the at least one consignment box (3) has at least one opening (33), which preferably can be locked by a hatch (34), for inserting and removing at least one consignment and/or door and, preferably, a locking means (35), in particular lock, is provided for locking the hatch (34) and/or door in a position which locks the opening (33).

## Revendications

1. Robot transporteur modulaire (1) pour le transport d'envois, avec au moins un élément de base (2) pour la structure physique du robot transporteur (1), avec au moins deux modules complémentaires (15, 17) pour équiper techniquement le robot transporteur (1), avec au moins une boîte d'envois (3) pour la réception d'envois et avec au moins un dispositif de commande (13) pour commander le robot transporteur (1), ledit au moins un élément de base (2) et chacun des modules complémentaires (15, 17) présentant des éléments de jonction (8) correspondants et étant respectivement reliés entre eux par au moins une connexion électrique comportant les éléments de jonction (8) correspondants, ledit au moins un élément de base (2) présentant au moins un faisceau de câbles pour connecter électriquement entre eux les éléments de jonction (8) de l'élément de base (2), ledit au moins un élément de base (2) et les modules complémentaires (15, 17) étant conçus de manière à correspondre l'un à l'autre de telle sorte que les éléments de jonction (8) desdits au moins deux modules complémentaires (15, 17) peuvent être reliés respectivement au choix directement à au moins deux éléments de jonction (8) prévus à des endroits différents en formant respectivement une jonction commune avec ledit au moins un élément de base (2), **caractérisé en ce que** ledit au moins un élément de base (2) présente une pluralité de logements (5) mutuellement espacés pour loger, par complémentarité de forme, des modules complémentaires (15, 17), lesdits au moins deux modules complémentaires (15, 17) étant logés, par complémentarité de forme, dans des logements (5) différents, les logements (5) présentant une ouverture (6) pour introduire les modules complémentaires (15, 17) et au moins un élément de jonction (8) étant prévu sur les faces des logements (5) opposées aux ouvertures (6).

2. Robot transporteur modulaire selon la revendication 1, **caractérisé en ce que** les éléments de jonction (8) sont conçus, au moins essentiellement, comme des éléments de jonction emboîtables et/ou la connexion électrique est conçue, au moins essentiellement, comme une connexion électrique emboîtable, et/ou **en ce que** l'on prévoit au moins un dispositif de communication pour la communication entre le robot transporteur (1) et une station de contrôle externe, au moins un dispositif d'entraînement pour le déplacement du robot transporteur (1) vers un emplacement de réception et/ou un emplacement de livraison des envois et/ou au moins un routeur de signaux (14) pour la transmission de signaux, notamment d'au moins un type déterminé de signaux, entre des modules complémentaires (15, 17).

3. Robot transporteur modulaire selon la revendication 1 ou 2, **caractérisé en ce qu'**au moins un module complémentaire (17) est logé simultanément dans deux logements (5) adjacents dudit au moins un élément de base (2) et **en ce que**, de préférence, ledit au moins un module complémentaire (17) est relié respectivement à un élément de jonction (8) associé à chaque logement (5) en formant une jonction et/ou **en ce qu'**une paroi (19) séparant les deux logements (5) adjacents est logée, au moins partiellement, dans un cavité (18) du module complémentaire (17).

4. Robot transporteur modulaire selon l'une des revendications 1 à 3, **caractérisé en ce que** ledit au moins un élément de base (2), en plus de la jonction, est en outre relié mécaniquement, de préférence respectivement par au moins une jonction par encliquetage (11), auxdits au moins deux modules complémentaires (15, 17) et l'on prévoit, de préférence, les jonctions mécaniques sur les faces des logements (5) opposées aux ouvertures (6) et/ou **en ce que** l'on prévoit ledit au moins un dispositif de commande (13) dans un module complémentaire (15, 17) sous forme d'un module de commande (21), ledit au moins un dispositif de communication dans un module complémentaire sous forme d'un module de communication (20) et/ou ledit au moins un dispositif d'entraînement dans un module complémentaire sous forme d'un module d'entraînement (22).

5. Robot transporteur modulaire selon l'une des revendications 1 à 4, **caractérisé en ce qu'**au moins un module complémentaire est conçu sous forme de boîte d'envois (3) pour le transport d'envois, sous forme de module d'entraînement (22) pour le déplacement du robot transporteur (1) vers un emplacement de réception et/ou un emplacement de livraison des envois, sous forme de module d'essieu pour le montage d'une roue (24), sous forme de module de communication (20) pour une communication entre le robot transporteur (1) et une station de contrôle externe ou un autre robot transporteur (1), sous forme de module de commande (21) pour commander le robot transporteur (1), sous forme de module de batterie (31) pour l'alimentation en voltage du robot transporteur (1), sous forme de module d'éclairage (27) pour l'éclairage du robot transporteur (1) et/ou de l'environnement du robot transporteur (1), sous forme de module de capteurs (28) pour la détection de l'environnement du robot transporteur (1) et/ou sous forme de module solaire (32) pour l'alimentation du robot transporteur (1) en courant obtenu par au moins un panneau solaire (4).

6. Robot transporteur modulaire selon l'une des revendications 1 à 5, **caractérisé en ce que** ledit au moins un faisceau de câbles (12) présente, de préférence certaines, lignes pour l'alimentation en voltage d'au moins un module complémentaire (15, 17), des lignes pour la transmission d'instructions de commande et/ou d'informations entre des modules complémentaires (15, 17) et/ou entre au moins un module complémentaire (15, 17) et ledit au moins un dispositif de commande (13) et/ou dispositif de communication.

7. Robot transporteur modulaire selon l'une des revendications 1 à 6, **caractérisé en ce que** l'on prévoit au moins deux éléments de base (2), notamment similaires, de préférence sur une face supérieure et/ou une face inférieure, avec des éléments de jonction de base (9) correspondants, notamment des éléments de jonction de base emboîtables, et que, de préférence, lesdits au moins deux éléments de base (2) sont reliés, de préférence, superposés, par une jonction de base formée par les éléments de jonction de base (9) correspondants, notamment une jonction de base emboîtable, et/ou les au moins deux éléments de base (2) sont reliés entre eux, en plus de la jonction de base, notamment la jonction de base emboîtable, en outre mécaniquement, de préférence par des jonctions par encliquetage (11), et **en ce que** l'on prévoit, plus préférablement, des jonctions mécaniques sur les bords des éléments de base (2) tournés l'un vers l'autre.

8. Robot transporteur modulaire selon l'une des revendications 1 à 7, **caractérisé en ce que** ladite au moins une boîte d'envois (3) présente, de préférence sur une face supérieure et/ou une face inférieure, au moins un élément de jonction de base (9), notamment un élément de jonction de base emboîtable, pour la jonction avec un élément de base (2) et/ou avec une autre boîte d'envois (3) et **en ce que**, de préférence, ladite au moins une boîte d'envois (3) présente, sur une face supérieure et/ou une face inférieure, des éléments de jonction de base (9) correspondants les uns aux autres et/ou aux éléments de jonction de base (9) d'au moins un élément de base (2).

9. Robot transporteur modulaire selon l'une des revendications 1 à 8, **caractérisé en ce qu'**au moins un panneau solaire (4) présente, de préférence sur une face inférieure, au moins un élément de jonction de base (9), notamment un élément de jonction de base emboîtable, pour la jonction avec un élément de base (2) et/ou avec une autre boîte d'envois (3) et, de préférence, l'élément de jonction de base (9) dudit au moins un panneau solaire (4) est conçu de manière à correspondre à au moins un élément de jonction de base (9) d'au moins un élément de base (2) et/ou d'une boîte d'envois (3) et/ou **en ce que** ledit au moins un élément de base (2), ladite au moins une boîte d'envois (3) et/ou ledit au moins un panneau solaire (4) sont agencés superposés dans plusieurs plans et, de préférence, ledit au moins un élément de base (2), ladite au moins une boîte d'envois (3) et ledit au moins un panneau solaire (4) sont reliés directement entre eux, notamment par l'intermédiaire d'une jonction par encliquetage (11).

10. Robot transporteur modulaire selon l'une des revendications 1 à 9, **caractérisé en ce que** l'on prévoit au moins un frein électromoteur comprenant, notamment, un frein à courants de Foucault, pour convertir l'énergie de freinage en énergie électrique et, de préférence, le frein électromoteur est relié à une batterie et/ou à un module de batterie pour stocker l'énergie électrique récupérée et/ou **en ce que** ladite au moins une boîte d'envois (3) présente au moins une ouverture (6), pouvant être fermée, de préférence, par une trappe (34) et/ou une porte, pour l'insertion et le prélèvement d'au moins un envoi et, de préférence, l'on prévoit un moyen de verrouillage (35), notamment une serrure, pour verrouiller la trappe (14) et/ou la porte dans une position pouvant fermer l'ouverture.

11. Système de robot transporteur pour l'assemblage modulaire de robots transporteurs modulaires (1) selon l'une des revendications 1 à 10 pour le transport des envois, avec des éléments de base (2) pour la structure physique du robot transporteur (1), différents modules complémentaires (15, 17) pour équiper techniquement le robot transporteur (1), et avec des dispositifs de commande (13) pour commander le robot transporteur (1), les éléments de base (2) et les modules complémentaires (15, 17) présentant des éléments de jonction (8) correspondants pour connecter électriquement les éléments de base (2) respectivement avec une pluralité de modules complémentaires (15, 17), les éléments de base (2) présentant respectivement au moins un faisceau de câbles (12) pour connecter électriquement entre eux les éléments de jonction (8) de l'élément de base (2), et les éléments de base (2) et les modules complémentaires (15, 17) étant conçus de manière à se correspondre de sorte que, au choix, à un endroit des éléments de base (2), des modules complémentaires (15, 17) similaires et/ou différents peuvent être reliés électriquement aux éléments de base (2) par l'intermédiaire de jonctions de base, notamment des jonctions de base emboîtables, et/ou en ce que, au choix, des modules complémentaires (15, 17) similaires et/ou différents peuvent être reliés électriquement aux éléments de base (2) à différents endroits des éléments de base (2) par l'intermédiaire de jonctions, les éléments de base (2) présentant chacun une pluralité de logements (5) mutuellement espacés pour loger, par complémentarité de forme, des modules complémentaires (15, 17) similaires et/ou différents, au moins deux modules complémentaires (15, 17) similaires et/ou différents pouvant être logés, par complémentarité de forme, dans des logements (5) différents et les logements des éléments de base (2) présentant chacun une ouverture pour introduire les modules complémentaires et au moins un élément de jonction sur les faces des logements opposées aux ouvertures.

12. Système de robot transporteur selon la revendication 11, **caractérisé en ce que** l'on prévoit des dispositifs de communication pour un communication entre les robots transporteurs (1) et les stations de contrôle externes, des dispositifs d'entraînement pour le déplacement des robots transporteurs (1) vers un emplacement de réception et/ou un emplacement de livraison des envois et/ou des routeurs de signaux (14) pour la transmission de signaux, notamment d'au moins un type déterminé de signaux, entre les modules complémentaires (15, 17).

13. Système de robot transporteur selon l'une des revendications 11 ou 12, **caractérisé en ce que** l'on prévoit des modules complémentaires (17) pouvant être logés simultanément dans deux logements adjacents des éléments de base (2) et **en ce que**, de préférence, les modules complémentaires (17) peuvent être reliés simultanément avec des éléments de jonction (8) des deux logements (5) adjacents en formant une jonction, et/ou une paroi (19) séparant les deux logements (5) adjacents peut être logée, au moins partiellement, dans une cavité (18) des modules complémentaires (17) et/ou les éléments de base (2) peuvent être reliés mécaniquement, en plus d'une connexion électrique, de préférence par des jonctions par encliquetage (11), avec des modules complémentaires (15, 17) et **en ce que** l'on prévoit, plus préférablement, les jonctions mécaniques sur les faces des logements (5) opposées aux ouvertures (6).

14. Système de robot transporteur selon l'une des revendications 11 à 13, **caractérisé en ce que** l'on prévoit des dispositifs de commande (13) dans des modules complémentaires sous forme de modules de commande (21), des dispositifs de communication dans des modules complémentaires sous forme de modules de communication (20) et/ou des dispositifs d'entraînement dans des modules complémentaires sous forme de modules d'entraînement (22) et/ou **en ce que** l'on prévoit des modules complémentaires sous forme de boîtes d'envois (3) similaires et/ou différentes pour le transport des envois et/ou sous forme de modules d'entraînement (22) similaires et/ou différents pour le déplacement du robot transporteur (1) vers un emplacement de réception et/ou un emplacement de livraison des envois, sous forme de modules d'axe similaires et/ou différents pour le montage d'une roue (14), sous forme de modules de communication (20) similaires et/ou différents pour une communication entre le robot transporteur (1) et une station de contrôle externe ou un autre robot transporteur (1), sous forme de modules de commande (21) similaires et/ou différents pour commander le robot transporteur (1), sous forme de modules de batterie (31) pour l'alimentation en voltage du robot transporteur (1), sous forme de modules d'éclairage (27) similaires et/ou différents pour l'éclairage du robot transporteur (1) et/ou de l'environnement du robot transporteur (1), sous forme de modules capteurs (28) similaires et/ou différents pour la détection de l'environnement du robot transporteur (1) et/ou sous forme de modules solaires (32) similaires et/ou différents pour alimenter le robot transporteur (1) en courant obtenu par l'intermédiaire d'au moins un panneau solaire (4).

15. Système de robot transporteur selon l'une des revendications 11 à 14, **caractérisé en ce que** les faisceaux de câbles (12) des éléments de base (2) similaires et/ou différents présentent, de préférence certaines, des lignes pour l'alimentation en voltage d'au moins un module complémentaire (15, 17), des lignes pour la transmission d'instructions de commande et/ou d'informations entre les modules complémentaires (15, 17) et/ou entre au moins un module complémentaire (15, 17) et ledit au moins un dispositif de commande (13) et/ou dispositif de communication.

16. Système de robot transporteur selon l'une des revendications 11 à 15, **caractérisé en ce que** les éléments de base (2) similaires et/ou différents sont pourvus, de préférence, sur une face supérieure et/ou une face inférieure, respectivement d'éléments de jonction de base (9) correspondants, notamment d'éléments de jonction de base emboîtables, et, de préférence, les éléments de base (2), de préférence, superposés, peuvent être reliés entre eux par une jonction de base formée par les éléments de jonction de base (9) correspondants et/ou **en ce que** les éléments de base (2) similaires et/ou différents peuvent être reliés entre eux mécaniquement, de préférence, par des jonctions par encliquetage (11), en plus des jonctions de base, notamment des jonctions de base emboîtables, et, de préférence, les jonctions par encliquetage (11) sont prévues sur les bords des éléments de base (2) tournés l'un vers l'autre.

17. Système de robot transporteur selon l'une des revendications 11 à 16, **caractérisé en ce que** l'on prévoit des boîtes d'envois (3) similaires et/ou différentes et **en ce que**, de préférence, les boîtes d'envois (3) comportent, sur une face supérieure et/ou une face inférieure, au moins un élément de jonction de base (9), notamment un élément de jonction de base emboîtable, pour la jonction avec un élément de base (2) et/ou avec une autre boîte d'envois (3) et **en ce que**, de préférence encore, ladite au moins une boîte d'envois (3) présente sur une face supérieure et/ou une face inférieure des éléments de jonction de base (9) correspondants les uns aux autres et/ou aux éléments de jonction de base (9) des éléments de base (2).

18. Système de robot transporteur selon l'une des revendications 11 à 17, **caractérisé en ce que** l'on prévoit des modules solaires (32) et/ou des panneaux solaires (4) similaires et/ou différents et que l'on prévoit, de préférence, sur les faces inférieures des modules solaires (32), un élément de jonction de base (9), notamment un élément de jonction de base emboîtable, destiné à être relié à un élément de base (2), et/ou à une autre boîte d'envois (3) et/ou **en ce que** les éléments de base, les boîtes d'envois (3), les modules solaires (32) et/ou les panneaux solaires (4) peuvent être agencés superposés dans plusieurs plans et, de préférence, les éléments de base (2), les boîtes d'envois (3), les modules solaires (32) et/ou les panneaux solaires (4) peuvent être reliés directement entre eux, notamment par une jonction par encliquetage (11), et/ou **en ce que** ladite au moins une boîte d'envois (3) présente au moins une ouverture (33), pouvant être fermée, de préférence, par une trappe (34) et/ou une porte, pour l'insertion et l'extraction d'au moins un envoi et que l'on prévoit, de préférence, un moyen de verrouillage (35), notamment une serrure, pour verrouiller la trappe (34) et/ou la porte dans une position fermant l'ouverture (33).
